# EUROPEAN PATENT SPECIFICATION

(11) **EP 4 050 245 B1**
(45) Date of publication and mention of the grant of the patent: **22.04.2026**
(21) Application number: 19947094.9
(22) Date of filing: 29.11.2019
(51) Int. Cl.: B66D 1/54, B66D 1/12, B66D 3/08, B66D 1/04

(54) **DEVICE GATE FOR NUCLEAR POWER PLANT**
VORRICHTUNGSTÜR FÜR KERNKRAFTWERK
PORTE DE DISPOSITIF POUR CENTRALE NUCLÉAIRE

(30) Priority: 27.09.2019 CN 201910926073
(43) Date of publication of application: 31.08.2022
(73) Proprietor: China Nuclear Power Engineering Co., Ltd., Shenzhen, Guangdong 518124 (CN); China Nuclear Power Design Company Ltd. (Shenzhen), Shenzhen, Guangdong 518100 (CN); China General Nuclear Power Corporation, Shenzhen, Guangdong 518026 (CN); CGN Power Co., Ltd., Shenzhen, Guangdong 518026 (CN)
(72) Inventor: ZHANG, Feng, Shenzhen, Guangdong 518100 (CN); HE, Yingyong, Shenzhen, Guangdong 518100 (CN); XIE, Honghu, Shenzhen, Guangdong 518100 (CN); LIU, Xiaohua, Shenzhen, Guangdong 518100 (CN); CHEN, Chuyuan, Shenzhen, Guangdong 518100 (CN); YANG, Jinchun, Shenzhen, Guangdong 518100 (CN); RAN, Xiaobing, Shenzhen, Guangdong 518100 (CN); HUANG, Kai, Shenzhen, Guangdong 518100 (CN); LUAN, Luan, Shenzhen, Guangdong 518100 (CN); XIE, Ruze, Shenzhen, Guangdong 518100 (CN); QIN, Junwei, Shenzhen, Guangdong 518100 (CN); CHEN, Zhao, Shenzhen, Guangdong 518100 (CN); LI, Yue, Shenzhen, Guangdong 518100 (CN); ZHANG, Yihan, Shenzhen, Guangdong 518100 (CN); LI, Shilei, Shenzhen, Guangdong 518100 (CN); ZHAO, Xiaohong, Shenzhen, Guangdong 518100 (CN); LI, Jinzhao, Shenzhen, Guangdong 518100 (CN)
(74) Representative: Greaves Brewster LLP
(86) International application number: PCT/CN2019/121895
(87) International publication number: WO 2021/056810

(56) References cited:
- CN-A- 102 556 869
- CN-A- 104 700 906
- CN-A- 108 979 113
- CN-U- 203 877 844
- KR-A- 20140 085 640

## Description

### FIELD OF THE INVENTION

The present invention generally relates to nuclear power plants, and more particularly, relates to a device gate for nuclear power plant.

### BACKGROUND OF THE INVENTION

The device gate for nuclear power plant is a gate for entering and exit of large equipment. During construction and refueling shutdown of nuclear power plants, the device gate is opened to provide access of large equipment (such as steam generator) in the reactor building. During the operation of the nuclear power plant and in the accident state, the device gate is closed and forms a third barrier together with the reactor containment to prevent the leakage of radioactive materials, acting as part of the pressure boundary of the containment.

In the prior art, according to one technical solution, the device gate hoisting device is installed in the middle above the doorway, and includes two hoisting mechanisms connected by a rigid shaft to maintain the synchronism of the hoisting. However, the length of the wire ropes of the two hoisting mechanisms will change after operation, and the rigid shaft needs to be disassembled to adjust the length of the wire ropes, which is very troublesome to operate and maintain. The gate seal head is lowered and lifted by the wire rope on the hoisting mechanism. There is no guiding device, so it is difficult to maintain stability during the hoisting process. When lifting the highest position, the gate seal head is hung by the high-position suspending device. There is no other anti-seismic auxiliary mechanism. When closing the device gate, the operator needs to manually operate the handle of the suspending device, to keep the hook in an open position and the seal head can fall. A positioning device and a centering device are arranged at two sides of the lower part of the gate seal head, for centering the bolt holes of the seal head flange when the gate is closed. When the seal head reaches the position of the doorway, the seal head and the flange are connected with each other by manually pushing the seal head.

In the prior art, according to another technical solution, the device gate hoisting device includes two hoisting mechanisms arranged on two sides above the doorway together with the guiding device. Synchronization of the two hoisting mechanisms is maintained through the electronic control system, but the safety and reliability thereof are not as good as mechanical systems. The gate is equipped with guiding devices at two sides to realize various functions such as guiding, hanging, translation, centering, and positioning of the seal head at the same time. It has a high degree of automation and is easy to operate. However, due to the high degree of integration, the failure of any mechanism will cause the gate to fail to close quickly.

In the prior art, according to yet another technical solution, the device gate is installed in the middle above the doorway and includes a hoisting mechanism. It is provided with independent high-position suspending ears, guiding rails, and positioning rollers. When the seal head reaches the position of the doorway, the seal head is connected with the flange by manually pushing the seal head. When the seal head reaches the highest position, the lifting ear is manually hung, and there is no other anti-seismic auxiliary mechanism.

In view of the foregoing, what is needed, therefore, is to provide a device gate for nuclear power plant, to solve the technical problems of low safety and reliability and unsatisfactory anti-seismic performance of the device gate for nuclear power plant in the prior art.

CN203877844U discloses a device gate for nuclear power plant comprising a gate seal head, corresponding to an end surface of the shell ring and sealedly connected to the shell ring; a hoisting lifting assembly, positioned above the gate seal head and movably connected to the gate seal head, and configured for performing hoisting and resetting on the gate seal head; wherein the hoisting lifting assembly further comprises two hoisting brackets symmetrically arranged at two sides of the gate seal head and two hoisting mechanisms respectively fixed to the two corresponding hoisting brackets; the hoisting mechanisms being configured to hoist and reset the gate seal head; the hoisting brackets being configured to support the hoisting mechanism, the hoisting lifting assembly further comprising a control unit connected to the two hoisting mechanisms respectively, for controlling the two hoisting mechanisms to work synchronously wherein the hoisting brackets comprise further a first hoisting bracket and a second hoisting bracket, and the hoisting mechanism comprising a first hoisting mechanism and a second hoisting mechanism respectively fixed to the first hoisting bracket and the second hoisting bracket, and a rope winding mechanism connecting the first hoisting mechanism and the second hoisting mechanism; a high-position suspending assembly, positioned above the gate seal head and configured for being detachably connected to the gate seal head when the gate seal head is hoisted to a specified position.

CN104700906A relates to an equipment gate end enclosure

### SUMMARY OF THE INVENTION

One object of the present invention is to provide a safe and reliable device gate for nuclear power plant, to solve the technical problems of low safety and reliability and unsatisfactory anti-seismic performance of the device gate for nuclear power plant in the prior art.

The present invention relates to a device gate for a nuclear power plant as defined in claim 1. Preferred features of the invention are set out in the dependent claims.

According to the present invention, a device gate for nuclear power plant including a shell ring fixedly connected to a penetrating piece of containment through a shell ring flange is provided. The device gate for nuclear power plant further includes: a gate seal head, corresponding to an end surface of the shell ring and sealedly connected to the shell ring; a hoisting lifting assembly, positioned above the gate seal head and movably connected to the gate seal head and configured for performing hoisting and resetting on the gate seal head; a high-position suspending assembly, positioned above the gate seal head and configured for being detachably connected to the gate seal head when the gate seal head is hoisted to a specified position; and an anti-seismic limiting assembly, partially provided on the containment and movably connected to the gate seal head, and configured for performing limiting and anti-seismic processing on the gate seal head when the gate seal head is suspended on the high-position suspending assembly.

The device gate for nuclear power plant further includes: a guiding assembly, arranged at two sides of the gate seal head and configured to guide the gate seal head when the gate seal head is lowered and reset; and a positioning and centering assembly, arranged on an outer side of the gate seal head and at a shell ring flange corresponding to an outer side of the gate seal head, and configured for positioning and centering the gate seal head relative to the shell ring to achieve a sealed connection therebetween.

The hoisting bracket includes a first hoisting bracket and a second hoisting bracket, and the hoisting mechanism includes a first hoisting mechanism and a second hoisting mechanism respectively fixed to the first hoisting bracket and the second hoisting bracket, and a rope winding mechanism connecting the first hoisting mechanism and the second hoisting mechanism.

The rope winding mechanism includes: a first lifting pulley, a first balancing unit and a first guiding pulley wound and connected to the first wire rope and the second wire rope, a second lifting pulley, a second balancing unit and a second guiding pulley wound and connected to the third wire rope and the fourth wire rope, and an anti-breaker connecting the second wire rope and the fourth wire rope, to ensure work safety of the first hoisting mechanism and the second hoisting mechanism.

According one embodiment of the present invention, the hoisting lifting assembly includes two hoisting brackets symmetrically arranged at two sides of the gate seal head and two hoisting mechanisms respectively fixed to the two corresponding hoisting brackets; the hoisting mechanisms are configured to hoist and reset the gate seal head; the hoisting brackets are configured to support the hoisting mechanism; the hoisting lifting assembly further includes a control unit connected to the two hoisting mechanisms respectively, for controlling the two hoisting mechanisms to synchronously work.

According one embodiment of the present invention, the first hoisting mechanism includes: a first reel, a first wire rope and a second wire rope wound on the first reel. One end of the first wire rope is fixedly connected to the first reel, and other end of the first wire rope is fixedly connected to the first hoisting bracket. The second hoisting mechanism includes: a second reel, a third wire rope and a fourth wire rope wound on the second reel. One end of the third wire rope is fixedly connected to the second reel, and other end of the third wire rope is fixedly connected to the second hoisting bracket.

According to one embodiment of the present invention, one end of the second wire rope is fixedly connected to the first reel, and the other end of the second wire rope is wound and connected to the first lifting pulley, the first balancing unit, the first guiding pulley, and the anti-breaker in sequence. One end of the fourth wire rope is fixedly connected to the second reel, and the other end of the fourth wire rope is wound and connected to the second lifting pulley, the second balancing unit, the second guiding pulley and the anti-breaker in sequence.

According to one embodiment of the present invention, the anti-breaker includes a sliding groove, and a sliding shaft arranged in the sliding groove and slidably connected with the sliding groove. The sliding groove is fixedly connected with the high-position suspending assembly, the second wire rope is wound and connected to the sliding shaft and extends to one side close to the second hoisting mechanism, the fourth wire rope is wound and connected to the sliding shaft, and extends to one side close to the first hoisting mechanism, and extends to the second wire rope and the fourth wire rope close to one side of the second hoisting mechanism, and the fourth wire rope and the second wire rope extending to one side close to the first hoisting mechanism are fixedly connected by lock catches.

According to one embodiment of the present invention, the first hoisting mechanism further includes: a motor, a speed reducer, an operation brake, an emergency brake and a safety brake fixed on the first hoisting bracket. The motor is configured to provide driving force for the first reel. An output shaft of the motor is connected to an input shaft of the speed reducer. An output shaft of the speed reducer is connected to an input shaft of the first reel. The operation brake and the emergency brake are arranged on input shaft of the speed reducer respectively, and the safety brake is arranged on an input shaft of the first reel.

According to one embodiment of the present invention, the first hoisting mechanism further includes a handwheel, and the handwheel is arranged at an input shaft of the motor. When the motor loses power, the gate seal head is moved via the handwheel. The first hoisting mechanism further includes a heat dissipation unit disposed in the motor for dissipating heat of the motor.

According to one embodiment of the present invention, the first balancing unit includes: a support fixed on the first hoisting bracket, a rotation axis fixedly connected to the support, a balancing beam rotatably connected to the rotation axis, and a first hanging arm, a second hanging arm, a first damper and a second damper hinged to the balancing beam. The first hanging arm and the second hanging arm are symmetrically distributed along the support, one end of the first hanging arm and the second hanging arm away from the balancing beam are respectively provided with a first pulley and a second pulley. The first damper and the second damper are symmetrically distributed along the support and are located outside the first hanging arm and the second hanging arm. One end of the first damper and the second damper are fixedly connected to the balancing beam, and the other end of the first damper is fixedly connected to the first hoisting bracket. The rotation axis is provided with a weighing sensor, to monitor the stress state of the balancing beam in real time.

According to one embodiment of the present invention, the first lifting pulley includes: a third pulley, a fourth pulley, a bearing, a pulley spindle, an ear plate and an ear shaft. The third pulley and the fourth pulley are symmetrically distributed along the ear plate, and the third pulley and the fourth pulley are fixedly connected to the pulley spindle through the bearing. The ear shaft transversely extends through the ear plate, and the ear shaft is connected to the ear plate via rolling connection. The ear shaft is fixedly connected with the gate seal head. The first wire rope and the third pulley are wound and connected, and the second wire rope and the fourth pulley are wound and connected.

According to one embodiment of the present invention, the gate seal head is symmetrically provided with a first ear and a second ear on an upper part thereof. The second ear is fixedly connected with the second lifting pulley, and the first ear is fixedly connected with the ear shaft, to move upwardly under driving of the first lifting pulley and the second lifting pulley.

According to one embodiment of the present invention, the high-position suspending assembly includes: a high-position suspending bracket disposed directly above the gate seal head and a first suspending unit and a second suspending unit fixedly connected to the high-position suspending bracket. The first suspending unit and the second suspension unit are configured to detachably connect with the first hanging ear and the second hanging ear provided on two sides of the gate seal head respectively when the gate seal head is opened. The first hanging ear and the second hanging ear are respectively welded and connected to the gate seal head.

According to one embodiment of the present invention, the first suspending unit includes: a steel support, a suspending hook and a spring stopper. The steel support is fixed on the high-position suspending bracket, the suspending hook is hinged to the steel support, and the spring stopper is hinged to the suspending hook. When the gate seal head moves upwardly to a designated position, the first hanging ear pushes away the spring stopper to detachably connect with the suspending hook.

According to one embodiment of the present invention, the steel support includes a first support and a second support and a third support parallel with each other and perpendicular to the first support. The second support and the third support form an open space. One end of the suspending hook extends to the open space. The first suspending unit further includes a pin. The pin extends through the second support, the third support and the suspending hook, to realize the hinged connection between the suspending hook and the steel support.

According to one embodiment of the present invention, the high-position suspending bracket includes a plurality of main beams perpendicular to the containment, and a first beam, a second beam and a third beam perpendicular to the main beams. The main beam is fixedly connected to a wall of the nuclear power plant containment building. The first beam, the second beam and the main beam form a plurality of annular spaces. The steel support is fixedly connected with the annular spaces. The high-position suspending bracket further includes a plurality of oblique support beams to enhance stability of the high-position suspending bracket. The first guiding pulley and the second guiding pulley are respectively fixed to two ends of the third beam.

According to one embodiment of the present invention, the guiding assembly includes: a first guiding unit, the first guiding unit includes a vertically arranged first guiding rail and a first guiding wheel capable of moving up and down along the first guiding rail, one end of the first guiding wheel is fixedly connected to the gate seal head, and the other end is slidably connected to the first guiding rail; a second guiding unit, the second guiding unit includes a vertically arranged second guiding rail and a second guiding wheel capable of moving up and down along the second guiding rail, one end of the second guiding wheel is fixedly connected to the gate seal head, and the other end is slidably connected to the second guiding rail.

According to one embodiment of the present invention, the positioning and centering assembly includes a positioning unit and a centering unit. The positioning unit includes: a first support fixedly connected with flange of the shell ring, a first circular rail arranged inside the first support, and a first roller support fixedly connected to the gate seal head. The first roller is fixedly connected to the first roller support via a first roller shaft, so as to realize height positioning of the gate seal head. The centering unit includes: a second support fixedly connected with the flange of the shell ring, a second circular rail disposed inside the second support, and a second roller support fixedly connected to the gate seal head. The second roller and the third roller are connected to the second roller support via a second roller shaft and a third roller shaft, to realize automatic centering of the gate seal head.

According to one embodiment of the present invention, the anti-seismic limiting assembly includes a first anti-seismic bracket, a second anti-seismic bracket, a first anti-seismic pin, a second anti-seismic pin, a first latch and a second latch. The first anti-seismic bracket and the second anti-seismic bracket are welded to the containment of the nuclear power plant respectively. The first anti-seismic pin and the second anti-seismic pin are fixedly connected with a third ear and a fourth ear arranged at two sides of the gate seal head respectively, to restrict left and right movement of the gate seal head. The first latch and the second latch are movably connected to the first anti-seismic bracket and the second anti-seismic bracket respectively to restrict upward and downward movement of the gate seal head.

According to one embodiment of the present invention, the device gate for nuclear power plant further includes a translation assembly. The translation assembly includes a first translation unit and a second translation unit. The first translation unit and the second translation unit are fixedly connected to the first guiding rail and the second guiding rail, respectively. The first translation unit includes a first guiding slide, a first guiding block and a first push pull rod. The first guiding slide is fixedly connected to the first guiding rail. The first push pull rod is moveably connected to the first guiding block. The first guiding block is slidably connected to the first guiding slide through the first push pull rod, and the gate seal head translates under the guiding action of the first guiding block.

According to one embodiment of the present invention, the device gate for nuclear power plant further includes steel platforms at different heights for operation of staff, and the steel platforms at different heights are connected by a ladder.

Compared with the prior art, the present invention has the following technical effects. The present invention provides a device gate for nuclear power plant in view of the technical problems in the prior art, such as the safety and reliability of the device gate for nuclear power plant is not high and the anti-seismic performance does not meet the actual requirements. The device gate for nuclear power plant of the present invention can realize automatic high-position suspension, guidance, centering, positioning and translation of the device gate for nuclear power plant without manual intervention. Failure of a single mechanism does not affect the operation of other mechanisms, which improves the reliability of the equipment.

### BRIEF DESCRIPTION OF THE DRAWINGS

Fig. 1 is a schematic structural diagram of a device gate for nuclear power plant according to one embodiment of the present invention;
Fig. 2 is a schematic structural diagram of a hoisting mechanism for a device gate for nuclear power plant according to one embodiment of the present invention;
Fig. 3 is a schematic structural diagram of an anti-breaker for a device gate for nuclear power plant according to one embodiment of the present invention;
Fig. 4 is a schematic structural diagram of a first hoisting mechanism for a device gate for nuclear power plant according to one embodiment of the present invention;
Fig. 5 is a schematic structural diagram of a first balancing unit for a device gate for nuclear power plant according to one embodiment of the present invention;
Fig. 6 is a schematic structural diagram of a first lifting pulley for a device gate for nuclear power plant according to one embodiment of the present invention;
Fig. 7 is a schematic structural diagram of a first suspending unit for a device gate for nuclear power plant according to one embodiment of the present invention;
Fig. 8 is a schematic structural diagram of a high-position suspending bracket for a device gate for nuclear power plant according to one embodiment of the present invention;
Fig. 9 is a schematic structural diagram of a positioning unit for a device gate for nuclear power plant according to one embodiment of the present invention;
Fig. 10 is a schematic structural diagram of a centering unit for a device gate for nuclear power plant according to one embodiment of the present invention;
Fig. 11 is a schematic structural diagram of an anti-seismic limiting assembly for a device gate for nuclear power plant according to one embodiment of the present invention; and
Fig. 12 is a schematic structural diagram of a first translation unit for a device gate for nuclear power plant according to one embodiment of the present invention.

### DETAILED DESCRIPTION OF THE INVENTION

In order to solve the technical problems in the prior art, such as the safety and reliability of a device gate for nuclear power plant are not high and the anti-seismic performance of a device gate for nuclear power plant does not meet actual requirements, the present invention provides a device gate for nuclear power plant. The core idea of the present invention is in the device gate for nuclear power plant, the failure of a single mechanism does not affect the operation of other mechanisms, which improves the reliability of the equipment. The positioning and centering assembly is symmetrically distributed under the seal head, which can withstand the weight of the gate seal head, reduce the risk of bolt failure, and prevent the seal head from falling in extreme cases. Due to the arrangement of a new type of high-position suspending assembly, the automatic suspension and decoupling of the gate seal head can be realized during normal electric lifting or manual lifting mechanism after power failure, without the need for electronically controlled operation of the suspending device or manual intervention. Adoption of new type of hoisting mechanism with rope winding mechanism can achieve mechanical and electrical double redundancy, ensure automatic synchronization, and improve the synchronization of the operation of the hoisting mechanism. At the same time, if any wire rope breaks, at least one wire rope on the two hoisting mechanisms is effective, which improves the safety of the hoisting mechanism, and realizes the safety, reliability and anti-seismic performance of the device gate for nuclear power plant.

In order to make the objects, technical solutions and technical effects of the present invention clearer, the embodiments of the present invention will now be described in detail below with reference to the accompanying drawings.

### Embodiment

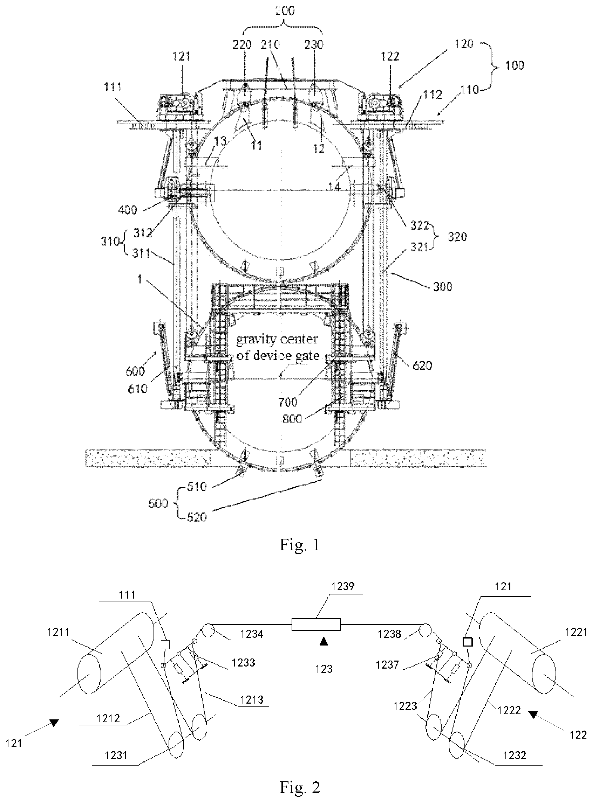

Referring to Fig. 1, a device gate for nuclear power plant including a shell ring fixedly connected to a penetrating piece of containment through a shell ring flange is provided. The device gate for nuclear power plant further includes:
a gate seal head 1, corresponding to an end surface of the shell ring and sealedly connected to the shell ring via a flange of the shell ring, to realize opening and closing of the shell ring;
a hoisting lifting assembly 100, positioned above the gate seal head 1 and movably connected to the gate seal head 1, and configured for performing hoisting and resetting on the gate seal head 1, to realize sealing and opening of the shell ring relative to the gate seal head 1;
a high-position suspending assembly 200, positioned above the gate seal head 1 and configured for being detachably connected to the gate seal head 1 when the gate seal head 1 is hoisted to a specified position, to realize fixing of the gate seal head 1 after hoisting; and
an anti-seismic limiting assembly 400, partially provided on the containment and movably connected to the gate seal head 1, and configured for performing limiting and anti-seismic processing on the gate seal head 1 when the gate seal head 1 is suspended on the high-position suspending assembly 200, to avoid back and forth shake and up and down movement of the gate seal head 1 in the event of an earthquake, thereby improving the anti-seismic performance of the device gate.

Further, the device gate for nuclear power plant further includes:
a guiding assembly 300, arranged at two sides of the gate seal head 1 and configured to guide the gate seal head 1 when the gate seal head 1 is lowered and reset; and
a positioning and centering assembly 500, arranged on an outer side of the gate seal head 1 and at a shell ring flange corresponding to an outer side of the gate seal head 1, and configured for positioning and centering the gate seal head 1 relative to the shell ring to achieve a sealed connection therebetween.

The guide assembly 300 includes:
a first guiding unit 310, the first guiding unit 310 includes a vertically arranged first guiding rail 311 and a first guiding wheel 312 capable of moving up and down along the first guiding rail 311, one end of the first guiding wheel 312 is fixedly connected to the gate seal head 1, and the other end is slidably connected to the first guiding rail 311;
a second guiding unit 320, the second guiding unit 320 includes a vertically arranged second guiding rail 321 and a second guiding wheel 322 capable of moving up and down along the second guiding rail 321, one end of the second guiding wheel 322 is fixedly connected to the gate seal head 1, and the other end is slidably connected to the second guiding rail 321.

The positioning and centering assembly 500 includes a positioning unit 510 and a centering unit 520. The positioning unit 510 and a centering unit 520 are configured to realize height positioning of the gate seal head 1 when the gate seal head 1 falls down, and realize automatic center positioning based on the gravity, to ensure center coincidence of the gate seal head 1 and the shell ring flange.

Further, referring to Fig. 1, the device gate for nuclear power plant further includes a translation assembly 600. The translation assembly 600 includes a first translation unit 610 and a second translation unit 620. The first translation unit 610 and the second translation unit 620 are fixedly connected to the first guiding rail 311 and the second guiding rail 321, respectively, to push the gate seal head 1 to close the shell ring flange when the device gate for nuclear power plant is closed and the gate seal head 1 is fall down to a position corresponding to the end face of the shell ring.

Further, referring to Fig. 1, the hoisting lifting assembly 100 includes two hoisting brackets 110 symmetrically arranged at two sides of the gate seal head 1 and two hoisting mechanisms 120 respectively fixed to the two corresponding hoisting brackets 110; the hoisting mechanisms 120 are configured to hoist and reset the gate seal head 1; the hoisting brackets 110 are configured to support the hoisting mechanism 120; the hoisting lifting assembly 100 further includes a control unit connected to the two hoisting mechanisms 120 respectively, for controlling the two hoisting mechanisms 120 to work synchronously, to ensure the stability of the gate seal head 1 in hoisting and reset and ensure the safety of the device gate for nuclear power plant.

Further, the hoisting bracket 110 includes a first hoisting bracket 111 and a second hoisting bracket 112. It should be noticed that, the first hoisting bracket 111 and the second hoisting bracket 112 are not fixedly connected to the first guiding rail 311 and the second guiding rail 321, to provide a certain degree of freedom when earthquake or other vibration event occurs in the nuclear power plant. The first guiding rail 311 and the second guiding rail 321 are both very long and, therefore, are not fixed to provide a certain degree of freedom, so as to avoid damage of the first guiding rail 311 and the second guiding rail 321 and improve the life span of the device gate for nuclear power plant.

Further, a first hanging ear 11, a second hanging ear 12, a first ear 13 and a second ear 14 are respectively welded on the gate seal head 1, wherein the first hanging ear 11 and the second hanging ear 12 are symmetrically arranged on the upper part of the gate seal head 1. The first ear 13 and the second ear 14 are symmetrically arranged in the middle of the gate seal head 1, so as to realize the lifting of the gate seal head 1.

Further, the hoisting mechanism 120 includes a first hoisting mechanism 121 and a second hoisting mechanism 122 respectively fixed to the first hoisting bracket 111 and the second hoisting bracket 112. The first hoisting mechanism 121 and the second hoisting mechanism 122 have a same height, to provide power to realize hoisting and reset of the gate seal head 1.

Further, the high-position suspending assembly 200 includes: a high-position suspending bracket 210 disposed directly above the gate seal head 1 and a first suspending unit 220 and a second suspending unit 230 fixedly connected to the high-position suspending bracket 210. The first suspending unit 220 and the second suspension unit 230 are configured to detachably connect with the first hanging ear 11 and the second hanging ear 12 when the gate seal head 1 is opened.

Further, the device gate for nuclear power plant further includes steel platforms 700 at different heights for operation of staff, and the steel platforms 700 at different heights are connected by a ladder 800. The steel platforms 700 are fixedly connected to the gate seal head 1, the ladder 800 are fixedly connected to steel platforms 700 at different heights.

Further, referring to Fig. 2, the hoisting mechanism 120 further includes a rope winding mechanism 123 connecting the first hoisting mechanism 121 and the second hoisting mechanism 122. The first hoisting mechanism 121 includes: a first reel 1211, a first wire rope 1212 and a second wire rope 1213 wound on the first reel 1211. One end of the first wire rope 1212 is fixedly connected to the first reel 1211, and other end of the first wire rope 1212 is fixedly connected to the first hoisting bracket 111.

The second hoisting mechanism 122 includes: a second reel 1221, a third wire rope 1222 and a fourth wire rope 1223 wound on the second reel 1221. One end of the third wire rope 1222 is fixedly connected to the second reel 1221, and other end of the third wire rope 1222 is fixedly connected to the second hoisting bracket 112.

The rope winding mechanism 123 includes: a first lifting pulley 1231, a first balancing unit 1233 and a first guiding pulley 1234 wound and connected to the first wire rope 1212 and the second wire rope 1213, a second lifting pulley 1232, a second balancing unit 1237 and a second guiding pulley 1238 wound and connected to the third wire rope 1222 and the fourth wire rope 1223, and an anti-breaker 1239 connecting the second wire rope 1213 and the fourth wire rope 1223, to ensure work safety of the first hoisting mechanism 121 and the second hoisting mechanism 122. It should be noted that, the first balancing unit 1233 and the second balancing unit 1237 are fixedly connected to the first hoisting bracket 111 and the second hoisting bracket 112 respectively.

One end of the second wire rope 1213 is fixedly connected to the first reel 1211, and the other end of the second wire rope 1213 is wound and connected to the first lifting pulley 1231, the first balancing unit 1233, the first guiding pulley 1234, and the anti-breaker 1239 in sequence. One end of the fourth wire rope 1223 is fixedly connected to the second reel 1221, and the other end of the fourth wire rope 1223 is wound and connected to the second lifting pulley 1232, the second balancing unit 1237, the second guiding pulley 1238 and the anti-breaker 1239 in sequence.

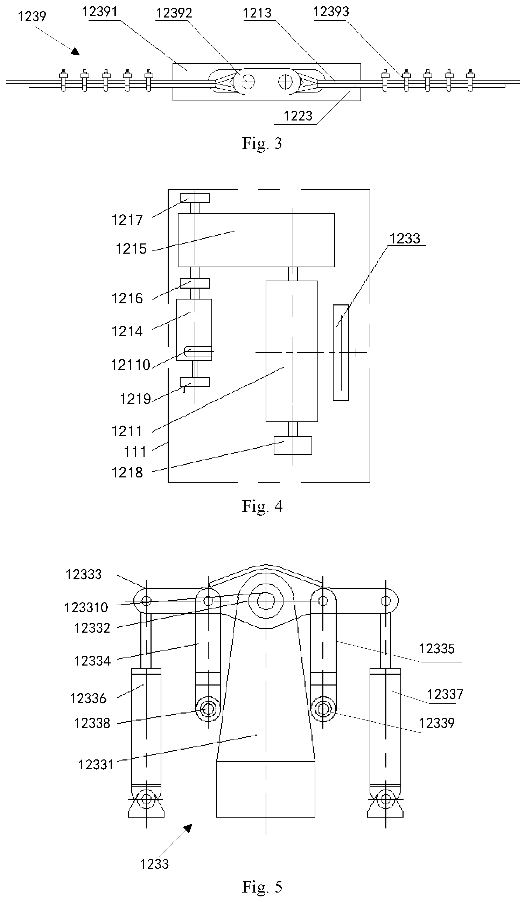

Further, referring to Fig. 3, the anti-breaker 1239 includes a sliding groove 12391, and a sliding shaft 12392 arranged in the sliding groove 12391 and slidably connected with the sliding groove 12391. The sliding groove 12391 is fixedly connected with the high-position suspending assembly 200. The second wire rope 1213 is wound and connected to the sliding shaft 12392 and extends to one side close to the second hoisting mechanism 122. The fourth wire rope 1223 is wound and connected to the sliding shaft 12392, and extends to one side close to the first hoisting mechanism 121, and extends to the second wire rope 1213 and the fourth wire rope 1223 close to one side of the second hoisting mechanism 122, and the fourth wire rope 1223 and the second wire rope 1213 extending to one side close to the first hoisting mechanism 121 are fixedly connected by lock catches 12393. The anti-breaker 1239 is used to ensure that when any one of the wire ropes breaks, at least one wire rope on the first hoisting mechanism 121 and the second hoisting mechanism 122 is effective, and there is no hoisting jam due to hoisting height difference between the two sides.

Further, referring to Fig. 4, the first hoisting mechanism 121 further includes a motor 1214, a speed reducer 1215, an operation brake 1216, an emergency brake 1217 and a safety brake 1218 fixed on the first hoisting bracket 111. The motor 1214 is configured to provide driving force for the first reel 1211. An output shaft of the motor 1214 is connected to an input shaft of the speed reducer 1215. An output shaft of the speed reducer 1215 is connected to an input shaft of the first reel 1211. The operation brake 1216 and the emergency brake 1217 are arranged on input shaft of the speed reducer 1215 respectively, and the safety brake 1218 is arranged on an input shaft of the first reel 1211. Due to the arrangement of the operation brake 1216, the first hoisting mechanism 121 can be operated under normal operation. Due to the arrangement of the operation brake 1216, brake can be realized by the emergency brake 1217 during emergency stop. At the same time, when the operation brake 1216 and the emergency brake 1217 fail, the first hoisting mechanism 121 can be brake via the safety brake 1218, to ensure the safety and reliability of the first hoisting mechanism 121 to the greatest extent.

Further, the first lifting mechanism 121 further includes a handwheel 1219, and the handwheel 1219 is arranged at an input shaft of the motor 1214, to move the gate seal head 1 via the handwheel 1219 in case of power loss of the motor 1214. The first hoisting mechanism 121 further includes a heat dissipation unit 12110 for dissipating heat of the motor 1214. The handwheel 1219 has a turbine worm structure. In case of power loss, the safety brake 1218 is released. The hoisted heavy object can be released via rotating the handwheel 1219, thereby reducing the risk of heavy objects falls from heights and improving the safety of the device gate for nuclear power plant.

It should be noted that, the second hoisting mechanism 122 has the same structure and configuration as the first hoisting mechanism 121. During operation, the electronic control system is used to ensure that both sides are synchronously hoisted, to avoid extra stress on the guiding rail due to different lifting speeds and jamming of the lifting and lowering of the gate seal head 1. The second hoisting mechanism 122 will not be repeated here.

Further, referring to Fig. 5, the first balancing unit 1233 includes: a support 12331 fixed on the first hoisting bracket 111, a rotation axis 12332 fixedly connected to the support 12331, a balancing beam 12333 rotatably connected to the rotation axis 12332, and a first hanging arm 12334, a second hanging arm 12335, a first damper 12336 and a second damper 12337 hinged to the balancing beam 12333. The first hanging arm 12334 and the second hanging arm 12335 are symmetrically distributed along the support 12331, one end of the first hanging arm 12334 and the second hanging arm 12335 away from the balancing beam 12333 are respectively provided with a first pulley 12338 and a second pulley 12339. The first damper 12336 and the second damper 12337 are symmetrically distributed along the support 12331 and are located outside the first hanging arm 12334 and the second hanging arm 12335. One end of the first damper 12336 and the second damper 12337 are fixedly connected to the balancing beam 12333, and the other end of the first damper 12336 is fixedly connected to the first hoisting bracket 111. The rotation axis 12332 is provided with a weighing sensor 123310, to monitor the stress state of the balancing beam 12333 in real time.

It should be noted that, the second balancing unit 1237 has a exactly same structure as that of the first balancing unit 1233, and will not be repeated here. The second balancing unit 1237 and the first balancing unit 1233 can effectively overcome the length difference between the second wire rope 1213 and the fourth wire rope 1223, to maintain the tension of the two wire ropes and monitor breakage and jamming during hoisting. When a wire rope breaks, the damper will effectively prevent the balancing beam 12333 from tilting suddenly and reduce the load impact.

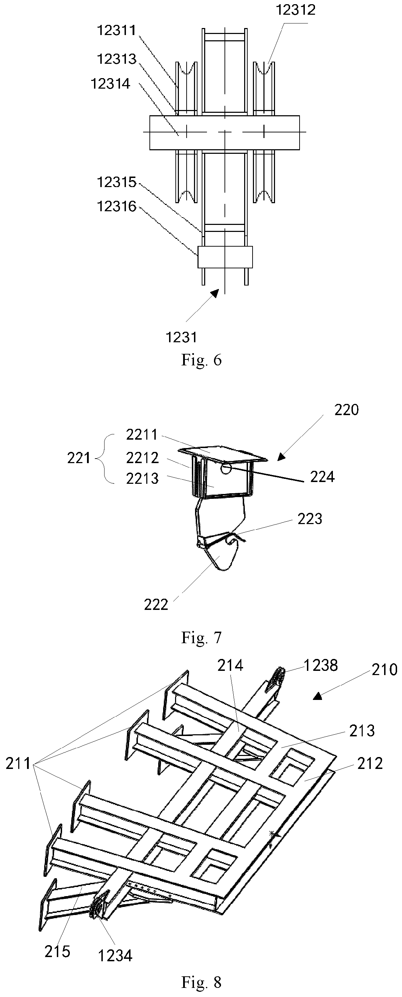

Further, referring to Fig. 6, the first lifting pulley 1231 includes a third pulley 12311, a fourth pulley 12312, a bearing 12313, a pulley spindle 12314, an ear plate 12315 and an ear shaft 12316. The third pulley 12311 and the fourth pulley 12312 are symmetrically distributed along the ear plate 12315. The third pulley 12311 and the fourth pulley 12312 are fixedly connected to the pulley spindle 12314 through the bearing 12313. The ear shaft 12316 transversely extends through the ear plate 12315, and the ear shaft 12316 is connected to the ear plate 12315 via rolling connection. The ear shaft 12316 is fixedly connected with the gate seal head 1. The first wire rope 1212 and the third pulley 12311 are wound and connected, and the second wire rope 1213 and the fourth pulley 12312 are wound and connected.

It should be noted that, the structures of the second lifting pulley 1232 and the first lifting pulley 1231 are exactly the same, which will not be repeated here. The first ear 13 is fixedly connected with the ear shaft 12316 of the first lifting pulley 1231. The second ear 14 is fixedly connected with the second lifting pulley 1232 for realizing up and down movement of the gate seal head 1 under the driving of the first lifting pulley 1231 and the second lifting pulley 1232.

Further, referring to Fig. 7, the first suspending unit 220 includes: a steel support 221, a suspending hook 222 and a spring stopper 223, the steel support 221 is fixed on the high-position suspending bracket 210, the suspending hook 222 is hinged to the steel support 221, and the spring stopper 223 is hinged to the suspending hook 222. When the gate seal head 1 move upwardly to a designated position, the first hanging ear 11 pushes away the spring stopper 223 to detachably connect with the suspending hook 222 under the action of the gravity and the spring stopper 223. When closing the device gate, the gate seal head 1 is lifted to open the spring stopper 223, the spring stopper 223 returns, the gate seal head 1 falls down, and the first hanging ear 11 pushes the suspending hook 222 open along the spring stopper 223 and fall, so as to realize automatic hanging and unhanging operation of the gate seal head 1. The entire assembly has a simple structure, has no complex transmission mechanisms and electrical equipment, and can automatically hang and unhook only by relying on the rising and falling of the device gate. No manual operation is required, thereby saving the opening and closing time of the device gate and avoiding manual operation errors caused by human factors. There is no need to set up a special operation platform, thereby saving a lot of space and avoiding interference with other structures and equipment.

Further, the steel support 221 includes a first support 2211, a second support 2212 and a third support 2213 parallel with each other and perpendicular to the first support 2211. The second support 2212 and the third support 2213 form an open space. One end of the suspending hook 222 extends to the open space. The first suspending unit 220 further includes a pin 224 extending through the second support 2212, the third support 2213 and the suspending hook 222, to realize the hinged connection between the suspending hook 222 and the steel support 221. Specifically, a first through hole and a second through hole may be provided on the second support 2212 and the third support 2213, respectively. A third through hole may be provided on the suspending hook 222. The pin 224 passes through the first through hole, the second through hole and the third through hole, to realize the hinged connection between the suspending hook 222 and the steel support 221.

Further, referring to Fig. 8, the high-position suspending bracket 210 includes a plurality of main beams 211 perpendicular to the containment, and a first beam 212, a second beam 213 and a third beam 214 perpendicular to the main beams 211. The main beam 211 is fixedly connected to a wall of the nuclear power plant containment building. The first beam 212, the second beam 213 and the main beam 211 form a plurality of annular spaces. The steel support 221 is fixedly connected with the annular spaces. The high-position suspending bracket 210 further includes a plurality of oblique support beams 215 to enhance stability of the high-position suspending bracket 210. The first guiding pulley 1234 and the second guiding pulley 1238 are respectively fixed to two ends of the third beam 214.

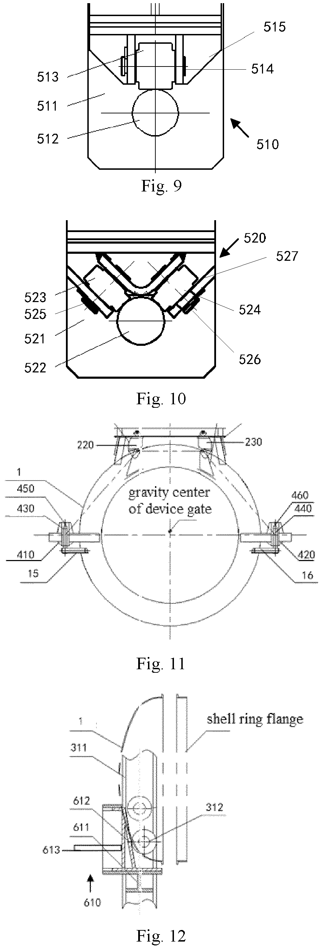

Further, referring to Fig. 9, the positioning unit 510 includes a first support 511 fixedly connected with flange of the shell ring, a first circular rail 512 arranged inside the first support 511, and a first roller support 515 fixedly connected to the gate seal head 1. The first roller 513 is fixedly connected to the first roller support 515 via a first roller shaft 514, so as to realize height positioning of the gate seal head when the gate seal head 1 is lowered and the bottom of the first roller 513 contacts the top of the first circular rail 512.

Further, referring to Fig. 10, the centering unit 520 includes a second support 521 fixedly connected with the flange of the shell ring, a second circular rail 522 disposed inside the second support 521, and a second roller support 527 fixedly connected to the gate seal head 1. The second roller 523 and the third roller 524 are connected to the second roller support 527 via a second roller shaft 525 and a third roller shaft 526 respectively, wherein the second roller 523 and the third roller 524 are symmetrically distributed along the second circular rail 522. When the gate seal head 1 descends, the bottoms of the second roller 523 and the third roller 524 are in contact with the outer peripheral surface of the second circular rail 522, and the bottoms of the second roller 523 and the third roller 524 can rotate along the outer periphery of the second circular rail 522. Under the action of gravity, the gate seal head 1 will automatically achieve center positioning, to ensure that the gate seal head 1 coincides with the center of the flange of the shell ring.

It should be noted that, the gate seal head 1 is connected with the shell ring flange through bolts, and the entire weight thereof is transferred to the shell ring flange through frictional force. In this case, the bolts do not bear shearing force. The positioning unit 510 and the centering unit 520 are symmetrically distributed under the gate seal head 1. In the extreme case of partial bolt failure and insufficient friction, the positioning unit 510 and the centering unit 520 can bear the weight of the gate seal head 1 and transmit the force to the shell ring. The gate seal head 1 is prevented from falling, so as to further improve the safety of the device gate for nuclear power plant.

Further, referring to Fig. 11, the anti-seismic limiting assembly 400 includes a first anti-seismic bracket 410, a second anti-seismic bracket 420, a first anti-seismic pin 430, a second anti-seismic pin 440, a first latch 450 and a second latch 460. The first anti-seismic bracket 410 and the second anti-seismic bracket 420 are welded to the containment of the nuclear power plant respectively. The first anti-seismic pin 430 and the second anti-seismic pin 440 are fixedly connected with a third ear 15 and a fourth ear 16 arranged at two sides of the gate seal head 1 respectively, and extend upwardly into the first anti-seismic bracket 410 and the second anti-seismic bracket 420, to movably connected to the first anti-seismic bracket 410 and the second anti-seismic bracket 420, wherein the third ear 15 and the fourth ear 16 are fixedly connected to the gate seal head 1, to restrict left and right movement of the gate seal head 1. The first latch 450 and the second latch 460 are movably connected to the first anti-seismic bracket 410 and the second anti-seismic bracket 420 respectively. It should be noticed that the axial direction of the first latch 450 and the second latch 460 are perpendicular to the axial direction of the first anti-seismic pin 430 and the second anti-seismic pin 440, to restrict upward and downward movement of the gate seal head 1. The first suspending unit 220, the second suspending unit 230, the first anti-seismic pin 430, and the second anti-seismic pin 440 form an isosceles trapezoid. The gravity center of the gate seal head 1 is close to the central axis in the trapezoid, to remarkably improve the anti-seismic performance of the device gate for nuclear power plant.

Further, referring to Fig. 12, the first translation unit 610 is fixedly connected with the first guiding rail 311, and the first translation unit 610 includes a first guiding slide 611, a first guiding block 612 and a first push pull rod. The first guiding slide 611 is fixedly connected to the first guiding rail 311, the first push pull rod 613 is pushable connected to the first guiding block 612, the first guiding block 3212 is slidably connected to the first guiding slide 611 through the first push pull rod 613. After reset, the gate seal head 1 translates under the guiding action of the first guide block 612.

It should be noted that the structure of the second translation unit 322 is exactly the same as that of the first translation unit 321, and will not be described in detail here.

It should be understood that: in the embodiment of the present invention, the two suspending devices can be arranged in the middle above the seal head to form a triangle with the two anti-seismic pins. The two suspending devices can also be arranged below the hoisting mechanism and form a rectangle with the two anti-seismic pins. The hoisting mechanism may not be equipped with a rope winding mechanism and a balancing unit, and both ends of the two wire ropes are directly fixed on the hoisting mechanism. The guiding, translation, positioning and centering devices of the device gate seal head can be omitted and controlled by manual operation. The positioning unit and the centering unit can exchange the arrangement position, change the arrangement angle, and can also be replaced by two symmetrically arranged positioning units or centering units.

**In** summary, the present invention provides a device gate for nuclear power plant, which realizes automatic high-position suspension, guidance, centering, positioning and translation without manual intervention. Failure of a single mechanism does not affect the operation of other mechanisms, and reliability of the device is improved. With a reasonable arrangement, two high-position suspending hooks and two anti-seismic pins form an isosceles trapezoid, which improves the anti-seismic capability of the device gate in the open state. The positioning and centering device is symmetrically distributed under the seal head. **In** extreme cases, the positioning and centering device can bear the weight of the gate seal head, reduce the risk of bolt failure, and prevent the seal head from falling. A high-position suspending assembly is used, which can be electrically lifted normally or by hand after power failure, to realize automatic suspension and decoupling of the gate seal head without the need for electronically controlled operation of the suspending device or manual intervention. The lifting mechanism adopts three brakes and a hand crank device, to improve the safety of the lifting mechanism. The function of manually releasing heavy objects after power failure is enhanced. The rope winding mechanism is adopted to realize double redundancy of mechanical and electrical, ensure automatic synchronization, and improve the synchronization of the operation of the lifting mechanism. At the same time, when any wire rope is broken, at least one wire rope on the two hoisting mechanisms is effective, which improves the safety of the hoisting mechanism. The use of a balancing unit can effectively overcome the length difference of the two wire ropes and maintain the tension of the two wire ropes, monitor the breakage of the wire rope and jamming of the lifting. At the same time, the load impact caused by the sudden breakage of the wire rope is reduced, and the safety, reliability and anti-seismic performance of the device gate for nuclear power plant can be achieved.

The above-described embodiments are only preferred embodiments of the present invention, and are not intended to limit the scope of the present invention. Any modification, equivalent replacement and improvement within the spirit and principle of the present invention should be included in the protection scope of the present invention.

## Claims

1. A device gate for nuclear power plant, comprising:
a shell ring fixedly connected to a penetrating piece of a containment through a shell ring flange;
a gate seal head (1), corresponding to an end surface of the shell ring and sealedly connected to the shell ring;
a hoisting lifting assembly (100), positioned above the gate seal head (1) and movably connected to the gate seal head (1), and configured for performing hoisting and resetting on the gate seal head (1), the hoisting lifting assembly (100) comprising two hoisting brackets (110) symmetrically arranged at two sides of the gate seal head (1) and two hoisting mechanisms (120) respectively fixed to the two corresponding hoisting brackets (110); the hoisting mechanisms (120) being configured to hoist and reset the gate seal head (1); the hoisting brackets (110) being configured to support the hoisting mechanisms (120), the hoisting lifting assembly (100) further comprising a control unit connected to the two hoisting mechanisms (120) respectively, for controlling the two hoisting mechanisms (120) to work synchronously; the hoisting brackets (110) comprise a first hoisting bracket (111) and a second hoisting bracket (112), and the hoisting mechanisms (120) comprising a first hoisting mechanism (121) and a second hoisting mechanism (122) respectively fixed to the first hoisting bracket (111) and the second hoisting bracket (112), and the hoisting lifting assembly (100) further comprising a rope winding mechanism (123) connecting the first hoisting mechanism (121) and the second hoisting mechanism (122);
a high-position suspending assembly (200), positioned above the gate seal head (1) and configured for being detachably connected to the gate seal head (1) when the gate seal head (1) is hoisted to a specified position; and
an anti-seismic limiting assembly (400), partially provided on the containment and movably connected to the gate seal head (1), and configured for performing limiting and anti-seismic processing on the gate seal head (1) when the gate seal head (1) is suspended on the high-position suspending assembly (200),
wherein the rope winding mechanism (123) comprises: a first lifting pulley (1231), a first balancing unit (1233) and a first guiding pulley (1234) wound and connected to a first wire rope (1212) and a second wire rope (1213), a second lifting pulley (1232), a second balancing unit (1237) and a second guiding pulley (1238) wound and connected to a third wire rope (1222) and a fourth wire rope (1223), and an anti-breaker (1239) connecting the second wire rope (1213) and the fourth wire rope (1223), to ensure work safety of the first hoisting mechanism (121) and the second hoisting mechanism (122).

2. The device gate for nuclear power plant according to claim 1, **characterized in that**, the device gate for nuclear power plant further comprises:
a guiding assembly (300), arranged at two sides of the gate seal head (1) and configured to guide the gate seal head (1) when the gate seal head (1) is lowered and reset; and
a positioning and centering assembly (500), arranged on an outer side of the gate seal head (1) and at a shell ring flange corresponding to an outer side of the gate seal head (1), and configured for positioning and centering the gate seal head (1) relative to the shell ring to achieve a sealed connection therebetween.

3. The device gate for nuclear power plant according to claim 1, **characterized in that**, the first hoisting mechanism (121) comprises: a first reel (1211), a first wire rope (1212) and a second wire rope (1213) wound on the first reel (1211), one end of the first wire rope (1212) is fixedly connected to the first reel (1211), and other end of the first wire rope (1212) is fixedly connected to the first hoisting bracket (111).

4. The device gate for nuclear power plant according to claim 1, **characterized in that**, the second hoisting mechanism (122) comprises: a second reel (1221), a third wire rope (1222) and a fourth wire rope (1223) wound on the second reel (1221), one end of the third wire rope (1222) is fixedly connected to the second reel (1221), and other end of the third wire rope (1222) is fixedly connected to the second hoisting bracket (112).

5. The device gate for nuclear power plant according to claim 1, **characterized in that**, one end of the second wire rope (1213) is fixedly connected to the first reel (1211), and the other end of the second wire rope (1213) is wound and connected to the first lifting pulley (1231), the first balancing unit (1233), the first guiding pulley (1234), and the anti-breaker (1239) in sequence;
one end of the fourth wire rope (1223) is fixedly connected to the second reel (1221), and the other end of the fourth wire rope (1223) is wound and connected to the second lifting pulley (1232), the second balancing unit (1237), the second guiding pulley (1238) and the anti-breaker (1239) in sequence.

6. The device gate for nuclear power plant according to claim 1 or 5, **characterized in that**, the anti-breaker (1239) comprises a sliding groove (12391), and a sliding shaft (12392) arranged in the sliding groove (12391) and slidably connected with the sliding groove (12391), the sliding groove (12391) is fixedly connected with the high-position suspending assembly (200), the second wire rope (1213) is wound and connected to the sliding shaft (12392) and extends to one side close to the second hoisting mechanism (122), the fourth wire rope (1223) is wound and connected to the sliding shaft (12392), and extends to one side close to the first hoisting mechanism (121), and extends to the second wire rope (1213) and the fourth wire rope (1223) close to one side of the second hoisting mechanism (122), and the fourth wire rope (1223) and the second wire rope (1213) extending to one side close to the first hoisting mechanism (121) are fixedly connected by lock catches (12393).

7. The device gate for nuclear power plant according to claim 6, **characterized in that**, the first hoisting mechanism (121) further comprises: a motor (1214), a speed reducer (1215), an operation brake (1216), an emergency brake (1217) and a safety brake (1218) fixed on the first hoisting bracket (111), the motor (1214) is configured to provide driving force for the first reel (1211), an output shaft of the motor (1214) is connected to an input shaft of the speed reducer (1215), an output shaft of the speed reducer (1215) is connected to an input shaft of the first reel (1211), the operation brake (1216) and the emergency brake (1217) are arranged on input shaft of the speed reducer (1215) respectively, and the safety brake (1218) is arranged on an input shaft of the first reel (1211).

8. The device gate for nuclear power plant according to claim 1, **characterized in that**, the first hoisting mechanism (121) further comprises a handwheel (1219), and the handwheel (1219) is arranged at an input shaft of the motor (1214) fixed on the first hoisting bracket (111), when the motor (1214) loses power, the gate seal head (1) is released down via driving the hoisting mechanism (120) through the handwheel (1219); the first hoisting mechanism (121) further comprises a heat dissipation unit (12110) disposed above the motor (1214) for dissipating heat of the motor (1214).

9. The device gate for nuclear power plant according to claim 1 or 5, **characterized in that**, the first balancing unit (1233) comprises: a support (12331) fixed on the first hoisting bracket (111), a rotation axis (12332) fixedly connected to the support (12331), a balancing beam (12333) rotatably connected to the rotation axis (12332), and a first hanging arm (12334), a second hanging arm (12335), a first damper (12336) and a second damper (12337) hinged to the balancing beam (12333), the first hanging arm (12334) and the second hanging arm (12335) are symmetrically distributed along the support (12331), one end of the first hanging arm (12334) and the second hanging arm (12335) away from the balancing beam (12333) are respectively provided with a first pulley (12338) and a second pulley (12339), the first damper (12336) and the second damper (12337) are symmetrically distributed along the support (12331) and are located outside the first hanging arm (12334) and the second hanging arm (12335), one end of the first damper (12336) and the second damper (12337) are fixedly connected to the balancing beam (12333), and the other end of the first damper (12336) is fixedly connected to the first hoisting bracket (111); the rotation axis (12332) is provided with a weighing sensor (123310), to monitor the stress state of the balancing beam (12333) in real time.

10. The device gate for nuclear power plant according to claim 9, **characterized in that**, the first lifting pulley (1231) comprises: a third pulley (12311), a fourth pulley (12312), a bearing (12313), a pulley spindle (12314), an ear plate (12315) and an ear shaft (12316), the third pulley (12311) and fourth pulley (12312) are symmetrically distributed along the ear plate (12315), the third pulley (12311) and the fourth pulley (12312) are fixedly connected to the pulley spindle (12314) through the bearing (12313), the ear shaft (12316) transversely extends through the ear plate (12315), and the ear shaft (12316) is connected to the ear plate (12315) via rolling connection, the ear shaft (12316) is fixedly connected with the gate seal head (1); the first wire rope (1212) and the third pulley (12311) are wound and connected, the second wire rope (1213) and the fourth pulley (12312) are wound and connected.

11. The device gate for nuclear power plant according to claim 1 or 5, **characterized in that**, the gate seal head (1) is symmetrically provide with a first ear (13) and a second ear (14) on an upper part thereof, the second ear (14) is fixedly connected with the second lifting pulley (1232), and the first ear (13) is fixedly connected with the ear shaft (12316), to move upwardly under driving of the first lifting pulley (1231) and the second lifting pulley (1232).

12. The device gate for nuclear power plant according to claim 1, **characterized in that**, the high-position suspending assembly (200) comprises: a high-position suspending bracket (210) disposed directly above the gate seal head (1) and a first suspending unit (220) and a second suspending unit (230) fixedly connected to the high-position suspending bracket (210), and the first suspending unit (220) and the second suspension unit (230) are configured to detachably connect with the first hanging ear (11) and the second hanging ear (12) provided on two sides of the gate seal head (1) respectively when the gate seal head (1) is opened, the first hanging ear (11) and the second hanging ear (12) are respectively welded and connected to the gate seal head (1).

13. The device gate for nuclear power plant according to claim 12, **characterized in that**, the first suspending unit (220) comprises: a steel support (221), a suspending hook (222) and a spring stopper (223), the steel support (221) is fixed on the high-position suspending bracket (210), the suspending hook (222) is hinged to the steel support (221), the spring stopper (223) is hinged to the suspending hook (222), when the gate seal head (1) moves upwardly to a designated position, the first hanging ear (11) pushes away the spring stopper (223) to detachably connect with the suspending hook (222).

14. The device gate for nuclear power plant according to claim 13, **characterized in that**, the steel support (221) comprises a first support (2211) and a second support (2212) and a third support (2213) parallel with each other and perpendicular to the first support (2211), the second support (2212) and the third support (2213) form an open space, one end of the suspending hook (222) extends to the open space, the first suspending unit (220) further comprises a pin (224), the pin (224) extends through the second support ( 2212), the third support (2213) and the suspending hook (222), to realize the hinged connection between the suspending hook (222) and the steel support (221).

15. The device gate for nuclear power plant according to claim 14, **characterized in that**, the high-position suspending bracket (210) comprises a plurality of main beams (211) perpendicular to the containment, and a first beam (212), a second beam (213) and a third beam (214) perpendicular to the main beams (211), the main beam (211) is fixedly connected to a wall of the nuclear power plant containment building, the first beam (212), the second beam (213) and the main beam (211) form a plurality of annular spaces, the steel support (221) is fixedly connected with the annular spaces, the high-position suspending bracket (210) further comprises a plurality of oblique support beams (215) to enhance stability of the high-position suspending bracket (210), and the first guiding pulley (1234) and the second guiding pulley (1238) are respectively fixed to two ends of the third beam (214).

16. The device gate for nuclear power plant according to claim 2, **characterized in that**, the guiding assembly (300) comprises:
a first guiding unit (310), the first guiding unit (310) comprises a vertically arranged first guiding rail (311) and a first guiding wheel (312) capable of moving up and down along the first guiding rail (311), one end of the first guiding wheel (312) is fixedly connected to the gate seal head (1), and the other end is slidably connected to the first guiding rail (311);
a second guiding unit (320), the second guiding unit (320) comprises a vertically arranged second guiding rail (321) and a second guiding wheel (322) capable of moving up and down along the second guiding rail (321), one end of the second guiding wheel (322) is fixedly connected to the gate seal head (1), and the other end is slidably connected to the second guiding rail (321).

17. The device gate for nuclear power plant according to claim 2, **characterized in that**, the positioning and centering assembly (500) comprises a positioning unit (510) and a centering unit (520);
the positioning unit (510) comprises: a first support (511) fixedly connected with flange of the shell ring, a first circular rail (512) arranged inside the first support (511), and a first roller support (515) fixedly connected to the gate seal head (1), the first roller (513) is fixedly connected to the first roller support (515) via a first roller shaft (514), so as to realize height positioning of the gate seal head (1);
the centering unit (520) comprises: a second support (521) fixedly connected with the flange of the shell ring, a second circular rail (522) disposed inside the second support (521), and a second roller support (527) fixedly connected to the gate seal head (1), the second roller (523) and the third roller (524) are connected to the second roller support (527) via a second roller shaft (525) and a third roller shaft (526), to realize automatic centering of the gate seal head (1).

18. The device gate for nuclear power plant according to claim 1, **characterized in that**, the anti-seismic limiting assembly (400) comprises a first anti-seismic bracket (410), a second anti-seismic bracket (420), a first anti-seismic pin (430), a second anti-seismic pin (440), a first latch (450) and a second latch (460), the first anti-seismic bracket (410) and the second anti-seismic bracket (420) are welded to the containment of the nuclear power plant respectively, the first anti-seismic pin (430) and the second anti-seismic pin (440) are fixedly connected with a third ear (15) and a fourth ear (16) arranged at two sides of the gate seal head (1) respectively, to restrict left and right movement of the gate seal head (1), the first latch (450) and the second latch (460) are movably connected to the first anti-seismic bracket (410) and the second anti-seismic bracket (420) respectively to restrict upward and downward movement of the gate seal head (1).

19. The device gate for nuclear power plant according to claim 16, **characterized in that**, the device gate for nuclear power plant further comprises: a translation assembly (600), the translation assembly (600) comprises a first translation unit (610) and a second translation unit (620), the first translation unit (610) and the second translation unit (620) are fixedly connected to the first guiding rail (311) and the second guiding rail (321), respectively, the first translation unit (610) comprises a first guiding slide (611), a first guiding block (612) and a first push pull rod (613), the first guiding slide (611) is fixedly connected to the first guiding rail (311), the first push pull rod (613) is moveably connected to the first guiding block (612), the first guiding block (612) is slidably connected to the first guiding slide (611) through the first push pull rod (613), and the gate seal head (1) translates under the guiding action of the first guiding block (612) after being reset.

20. The device gate for nuclear power plant according to claim 1, **characterized in that**, the device gate for nuclear power plant further comprises steel platforms (700) at different heights for operation of staff, and the steel platforms (700) at different heights are connected by a ladder (800).

## Patentansprüche

1. Vorrichtungstür für ein Kernkraftwerk, umfassend:
einen Mantelring, der durch einen Mantelringflansch fest mit einem durchdringenden Teil eines Sicherheitsbehälters verbunden ist;
einen Türdichtkopf (1), der einer Endfläche des Mantelrings entspricht und abgedichtet mit dem Mantelring verbunden ist;
eine Hubhebebaugruppe (100), die über dem Türdichtkopf (1) positioniert und bewegbar mit dem Türdichtkopf (1) verbunden und dazu konfiguriert ist, ein Heben und Zurücksetzen an dem Türdichtkopf (1) durchzuführen, wobei die Hubhebebaugruppe (100) zwei Hebehalterungen (110), die symmetrisch an zwei Seiten des Türdichtkopfes (1) angeordnet sind, und zwei Hebemechanismen (120) umfasst, die jeweils an den zwei entsprechenden Hebehalterungen (110) befestigt sind; wobei die Hebemechanismen (120) dazu konfiguriert sind, den Türdichtkopf (1) zu heben und zurückzusetzen; wobei die Hebehalterungen (110) dazu konfiguriert sind, die Hebemechanismen (120) zu stützen, wobei die Hubhebebaugruppe (100) ferner eine Steuereinheit umfasst, die jeweils mit den zwei Hebemechanismen (120) verbunden ist, um die zwei Hebemechanismen (120) zu steuern, um synchron zu arbeiten; die Hebehalterungen (110) eine erste Hebehalterung (111) und eine zweite Hebehalterung (112) umfassen und die Hebemechanismen (120) jeweils einen ersten Hebemechanismus (121) und einen zweiten Hebemechanismus (122) umfassen, die jeweils an der ersten Hebehalterung (111) und der zweiten Hebehalterung (112) befestigt sind, und die Hubhebebaugruppe (100) ferner einen Seilwickelmechanismus (123) umfasst, der den ersten Hebemechanismus (121) und den zweiten Hebemechanismus (122) verbindet;
eine hoch positionierte Aufhängebaugruppe (200), die über dem Türdichtkopf (1) positioniert und dazu konfiguriert ist, lösbar mit dem Türdichtkopf (1) verbunden zu sein, wenn der Türdichtkopf (1) in eine spezifizierte Position gehoben wird; und
eine erdbebensichere Begrenzungsbaugruppe (400), die teilweise an dem Sicherheitsbehälter bereitgestellt und bewegbar mit dem Türdichtkopf (1) verbunden und dazu konfiguriert ist, eine begrenzende und erdbebensichere Verarbeitung an dem Türdichtkopf (1) durchzuführen, wenn der Türdichtkopf (1) an der hoch positionierten Aufhängebaugruppe (200) aufgehängt ist,
wobei der Seilwickelmechanismus (123) Folgendes umfasst: eine erste Hubriemenscheibe (1231), eine erste Ausgleichseinheit (1233) und eine erste Führungsriemenscheibe (1234), die mit einem ersten Drahtseil (1212) und einem zweiten Drahtseil (1213) gewickelt und verbunden sind, eine zweite Hubriemenscheibe (1232), eine zweite Ausgleichseinheit (1237) und eine zweite Führungsriemenscheibe (1238), die mit einem dritten Drahtseil (1222) und einem vierten Drahtseil (1223) gewickelt und verbunden sind, und einen Anti-Brecher (1239), der das zweite Drahtseil (1213) und das vierte Drahtseil (1223) verbindet, um eine Arbeitssicherheit des ersten Hebemechanismus (121) und des zweiten Hebemechanismus (122) sicherzustellen.

2. Vorrichtungstür für ein Kernkraftwerk nach Anspruch 1, **dadurch gekennzeichnet, dass** die Vorrichtungstür für ein Kernkraftwerk ferner Folgendes umfasst:
eine Führungsbaugruppe (300), die an zwei Seiten des Türdichtkopfes (1) angeordnet und dazu konfiguriert ist, den Türdichtkopf (1) zu führen, wenn der Türdichtkopf (1) abgesenkt und zurückgesetzt wird; und
eine Positionier- und Zentrierbaugruppe (500), die an einer Außenseite des Türdichtkopfes (1) und an einem Mantelringflansch, der einer Außenseite des Türdichtkopfes (1) entspricht, angeordnet und dazu konfiguriert ist, den Türdichtkopf (1) relativ zu dem Mantelring zu positionieren und zu zentrieren, um eine abgedichtete Verbindung dazwischen zu erreichen.

3. Vorrichtungstür für ein Kernkraftwerk nach Anspruch 1, **dadurch gekennzeichnet, dass** der erste Hebemechanismus (121) Folgendes umfasst: eine erste Trommel (1211), ein erstes Drahtseil (1212) und ein zweites Drahtseil (1213), die auf die erste Trommel (1211) gewickelt sind, wobei ein Ende des ersten Drahtseils (1212) fest mit der ersten Trommel (1211) verbunden ist und ein anderes Ende des ersten Drahtseils (1212) fest mit der ersten Hebehalterung (111) verbunden ist.

4. Vorrichtungstür für ein Kernkraftwerk nach Anspruch 1, **dadurch gekennzeichnet, dass** der zweite Hebemechanismus (122) Folgendes umfasst: eine zweite Trommel (1221), ein drittes Drahtseil (1222) und ein viertes Drahtseil (1223), die auf die zweite Trommel (1221) gewickelt sind, wobei ein Ende des dritten Drahtseils (1222) fest mit der zweiten Trommel (1221) verbunden ist und das andere Ende des dritten Drahtseils (1222) fest mit der zweiten Hebehalterung (112) verbunden ist.

5. Vorrichtungstür für ein Kernkraftwerk nach Anspruch 1, **dadurch gekennzeichnet, dass** ein Ende des zweiten Drahtseils (1213) fest mit der ersten Trommel (1211) verbunden ist und das andere Ende des zweiten Drahtseils (1213) gewickelt und nacheinander mit der ersten Hubriemenscheibe (1231), der ersten Ausgleichseinheit (1233), der ersten Führungsriemenscheibe (1234) und dem Anti-Brecher (1239) verbunden ist;
ein Ende des vierten Drahtseils (1223) fest mit der zweiten Trommel (1221) verbunden ist und das andere Ende des vierten Drahtseils (1223) gewickelt und nacheinander mit der zweiten Hubriemenscheibe (1232), der zweiten Ausgleichseinheit (1237), der zweiten Führungsriemenscheibe (1238) und dem Anti-Brecher (1239) verbunden ist.

6. Vorrichtungstür für ein Kernkraftwerk nach Anspruch 1 oder 5, **dadurch gekennzeichnet, dass** der Anti-Brecher (1239) eine Gleitnut (12391) und eine Gleitwelle (12392) umfasst, die in der Gleitnut (12391) angeordnet und gleitend mit der Gleitnut (12391) verbunden ist, die Gleitnut (12391) fest mit der hoch positionierten Aufhängebaugruppe (200) verbunden ist, das zweite Drahtseil (1213) gewickelt und mit der Gleitwelle (12392) verbunden ist und sich zu einer Seite in der Nähe des zweiten Hebemechanismus (122) erstreckt, das vierte Drahtseil (1223) gewickelt und mit der Gleitwelle (12392) verbunden ist und sich zu einer Seite in der Nähe des ersten Hebemechanismus (121) erstreckt und sich zu dem zweiten Drahtseil (1213) und dem vierten Drahtseil (1223) in der Nähe einer Seite des zweiten Hebemechanismus (122) erstreckt und das vierte Drahtseil (1223) und das zweite Drahtseil (1213), die sich zu einer Seite in der Nähe des ersten Hebemechanismus (121) erstrecken, durch Schlossfallen (12393) fest verbunden sind.

7. Vorrichtungstür für ein Kernkraftwerk nach Anspruch 6, **dadurch gekennzeichnet, dass** der erste Hebemechanismus (121) ferner Folgendes umfasst: einen Motor (1214), ein Untersetzungsgetriebe (1215), eine Betriebsbremse (1216), eine Notbremse (1217) und eine Sicherheitsbremse (1218), die an der ersten Hebehalterung (111) befestigt sind, wobei der Motor (1214) dazu konfiguriert ist, eine Antriebskraft für die erste Trommel (1211) bereitzustellen, eine Ausgangswelle des Motors (1214) mit einer Eingangswelle des Untersetzungsgetriebes (1215) verbunden ist, eine Ausgangswelle des Untersetzungsgetriebes (1215) mit einer Eingangswelle der ersten Trommel (1211) verbunden ist, die Betriebsbremse (1216) und die Notbremse (1217) jeweils auf einer Eingangswelle des Untersetzungsgetriebes (1215) angeordnet sind und die Sicherheitsbremse (1218) auf einer Eingangswelle der ersten Trommel (1211) angeordnet ist.

8. Vorrichtungstür für ein Kernkraftwerk nach Anspruch 1, **dadurch gekennzeichnet, dass** der erste Hebemechanismus (121) ferner ein Handrad (1219) umfasst und das Handrad (1219) an einer Eingangswelle des Motors (1214) angeordnet ist, die an der ersten Hebehalterung (111) befestigt ist, wenn der Motor (1214) Leistung verliert, der Türdichtkopf (1) über Antreiben des Hebemechanismus (120) durch das Handrad (1219) nach unten freigegeben wird; der erste Hebemechanismus (121) ferner eine Wärmeableitungseinheit (12110) umfasst, die über dem Motor (1214) angeordnet ist, um Wärme des Motors (1214) abzuleiten.

9. Vorrichtungstür für ein Kernkraftwerk nach Anspruch 1 oder 5, **dadurch gekennzeichnet, dass** die erste Ausgleichseinheit (1233) Folgendes umfasst: eine Stütze (12331), die an der ersten Hebehalterung (111) befestigt ist, eine Drehachse (12332), die fest mit der Stütze (12331) verbunden ist, einen Ausgleichsträger (12333), der drehbar mit der Drehachse (12332) verbunden ist, und einen ersten Hängearm (12334), einen zweiten Hängearm (12335), einen ersten Dämpfer (12336) und einen zweiten Dämpfer (12337), die an den Ausgleichsträger (12333) angelenkt sind, wobei der erste Hängearm (12334) und der zweite Hängearm (12335) symmetrisch entlang der Stütze (12331) verteilt sind, ein Ende des ersten Hängearms (12334) und des zweiten Hängearms (12335), die von dem Ausgleichsträger (12333) entfernt sind, jeweils mit einer ersten Riemenscheibe (12338) und einer zweiten Riemenscheibe (12339) bereitgestellt sind, der erste Dämpfer (12336) und der zweite Dämpfer (12337) symmetrisch entlang der Stütze (12331) verteilt sind und sich außerhalb des ersten Hängearms (12334) und des zweiten Hängearms (12335) befinden, ein Ende des ersten Dämpfers (12336) und des zweiten Dämpfers (12337) fest mit dem Ausgleichsträger (12333) verbunden sind und das andere Ende des ersten Dämpfers (12336) fest mit der ersten Hebehalterung (111) verbunden ist; wobei die Drehachse (12332) mit einem Wägesensor (123310) bereitgestellt ist, um den Spannungszustand des Ausgleichsträgers (12333) in Echtzeit zu überwachen.

10. Vorrichtungstür für ein Kernkraftwerk nach Anspruch 9, **dadurch gekennzeichnet, dass** die erste Hubriemenscheibe (1231) Folgendes umfasst: eine dritte Riemenscheibe (12311), eine vierte Riemenscheibe (12312), ein Lager (12313), eine Riemenscheibenspindel (12314), eine Ohrplatte (12315) und eine Ohrwelle (12316), wobei die dritte Riemenscheibe (12311) und die vierte Riemenscheibe (12312) symmetrisch entlang der Ohrplatte (12315) verteilt sind, die dritte Riemenscheibe (12311) und die vierte Riemenscheibe (12312) durch das Lager (12313) fest mit der Riemenscheibenspindel (12314) verbunden sind, sich die Ohrwelle (12316) quer durch die Ohrplatte (12315) erstreckt und die Ohrwelle (12316) über eine Rollverbindung mit der Ohrplatte (12315) verbunden ist, wobei die Ohrwelle (12316) fest mit dem Türdichtkopf (1) verbunden ist; wobei das erste Drahtseil (1212) und die dritte Riemenscheibe (12311) gewickelt und verbunden sind, wobei das zweite Drahtseil (1213) und die vierte Riemenscheibe (12312) gewickelt und verbunden sind.

11. Vorrichtungstür für ein Kernkraftwerk nach Anspruch 1 oder 5, **dadurch gekennzeichnet, dass** der Türdichtkopf (1) symmetrisch mit einem ersten Ohr (13) und einem zweiten Ohr (14) an einem oberen Teil davon bereitgestellt ist, das zweite Ohr (14) fest mit der zweiten Hubriemenscheibe (1232) verbunden ist und das erste Ohr (13) fest mit der Ohrwelle (12316) verbunden ist, um sich unter Antrieb der ersten Hubriemenscheibe (1231) und der zweiten Hubriemenscheibe (1232) nach oben zu bewegen.

12. Vorrichtungstür für ein Kernkraftwerk nach Anspruch 1, **dadurch gekennzeichnet, dass** die hoch positionierte Aufhängebaugruppe (200) Folgendes umfasst: eine hoch positionierte Aufhängungshalterung (210), die direkt über dem Türdichtkopf (1) angeordnet ist, und eine erste Aufhängungseinheit (220) und eine zweite Aufhängungseinheit (230), die fest mit der hoch positionierten Aufhängungshalterung (210) verbunden sind, und wobei die erste Aufhängungseinheit (220) und die zweite Aufhängungseinheit (230) dazu konfiguriert sind, lösbar mit dem ersten Aufhängeohr (11) und dem zweiten Aufhängeohr (12), die auf zwei Seiten des Türdichtkopfes (1) bereitgestellt sind, verbunden zu sein, wenn der Türdichtkopf (1) geöffnet ist, wobei das erste Aufhängeohr (11) und das zweite Aufhängeohr (12) jeweils geschweißt und mit dem Türdichtkopf (1) verbunden sind.

13. Vorrichtungstür für ein Kernkraftwerk nach Anspruch 12, **dadurch gekennzeichnet, dass** die erste Aufhängeeinheit (220) Folgendes umfasst: eine Stahlstütze (221), einen Aufhängehaken (222) und einen Federanschlag (223), wobei die Stahlstütze (221) an der hoch positionierten Aufhängehalterung (210) befestigt ist, wobei der Aufhängehaken (222) an der Stahlstütze (221) angelenkt ist, wobei der Federanschlag (223) an dem Aufhängehaken (222) angelenkt ist, wenn sich der Türdichtkopf (1) nach oben in eine vorgesehene Position bewegt, wobei das erste Aufhängeohr (11) den Federanschlag (223) wegdrückt, um sich lösbar mit dem Aufhängehaken (222) zu verbinden.

14. Vorrichtungstür für ein Kernkraftwerk nach Anspruch 13, **dadurch gekennzeichnet, dass** die Stahlstütze (221) eine erste Stütze (2211) und eine zweite Stütze (2212) und eine dritte Stütze (2213) parallel zueinander und senkrecht zu der ersten Stütze (2211) umfasst, die zweite Stütze (2212) und die dritte Stütze (2213) einen offenen Raum bilden, sich ein Ende des Aufhängehakens (222) zu dem offenen Raum erstreckt, die erste Aufhängeeinheit (220) ferner einen Stift (224) umfasst, sich der Stift (224) durch die zweite Stütze ( 2212), die dritte Stütze (2213) und den Aufhängehaken (222) erstreckt, um die gelenkige Verbindung zwischen dem Aufhängehaken (222) und der Stahlstütze (221) zu realisieren.

15. Vorrichtungstür für ein Kernkraftwerk nach Anspruch 14, **dadurch gekennzeichnet, dass** die hoch positionierte Aufhängungshalterung (210) eine Vielzahl von Hauptträgern (211) senkrecht zu dem Sicherheitsbehälter und einen ersten Träger (212), einen zweiten Träger (213) und einen dritten Träger (214) senkrecht zu den Hauptträgern (211) umfasst, der Hauptträger (211) fest mit einer Wand des Gebäudes des Kernkraftwerksicherheitsbehälters verbunden ist, der erste Träger (212), der zweite Träger (213) und der Hauptträger (211) eine Vielzahl von ringförmigen Räumen bilden, der Stahlstütze (221) fest mit den ringförmigen Räumen verbunden ist, die hoch positionierte Aufhängungshalterung (210) ferner eine Vielzahl von schrägen Stützträgern (215) umfasst, um die Stabilität der hoch positionierten Aufhängungshalterung (210) zu verbessern, und die erste Führungsriemenscheibe (1234) und die zweite Führungsriemenscheibe (1238) jeweils an zwei Enden des dritten Trägers (214) befestigt sind.

16. Vorrichtungstür für ein Kernkraftwerk nach Anspruch 2, **dadurch gekennzeichnet, dass** die Führungsbaugruppe (300) Folgendes umfasst:
eine erste Führungseinheit (310), wobei die erste Führungseinheit (310) eine vertikal angeordnete erste Führungsschiene (311) und ein erstes Führungsrad (312) umfasst, das in der Lage ist, sich entlang der ersten Führungsschiene (311) auf und ab zu bewegen, wobei ein Ende des ersten Führungsrads (312) fest mit dem Türdichtkopf (1) verbunden ist und das andere Ende verschiebbar mit der ersten Führungsschiene (311) verbunden ist;
eine zweite Führungseinheit (320), wobei die zweite Führungseinheit (320) eine vertikal angeordnete zweite Führungsschiene (321) und ein zweites Führungsrad (322) umfasst, das in der Lage ist, sich entlang der zweiten Führungsschiene (321) auf und ab zu bewegen, wobei ein Ende des zweiten Führungsrads (322) fest mit dem Türdichtkopf (1) verbunden ist und das andere Ende verschiebbar mit der zweiten Führungsschiene (321) verbunden ist.

17. Vorrichtungstür für ein Kernkraftwerk nach Anspruch 2, **dadurch gekennzeichnet, dass** die Positionier- und Zentrierbaugruppe (500) eine Positioniereinheit (510) und eine Zentriereinheit (520) umfasst;
die Positioniereinheit (510) Folgendes umfasst: eine erste Stütze (511), die fest mit dem Flansch des Mantelrings verbunden ist, eine erste kreisförmige Schiene (512), die innerhalb der ersten Stütze (511) angeordnet ist, und eine erste Riemenscheibenstütze (515), die fest mit dem Türdichtkopf (1) verbunden ist, wobei die erste Riemenscheibe (513) über eine erste Riemenscheibenwelle (514) fest mit der ersten Riemenscheibenstütze (515) verbunden ist, um eine Höhenpositionierung des Türdichtkopfes (1) zu realisieren;
die Zentriereinheit (520) Folgendes umfasst: eine zweite Stütze (521), die fest mit dem Flansch des Mantelrings verbunden ist, eine zweite kreisförmige Schiene (522), die innerhalb der zweiten Stütze (521) angeordnet ist, und eine zweite Riemenscheibenstütze (527), die fest mit dem Türdichtkopf (1) verbunden ist, wobei die zweite Riemenscheibe (523) und die dritte Riemenscheibe (524) über eine zweite Riemenscheibenwelle (525) und eine dritte Riemenscheibenwelle (526) mit der zweiten Riemenscheibenstütze (527) verbunden sind, um eine automatische Zentrierung des Türdichtkopfes (1) zu realisieren.

18. Vorrichtungstür für ein Kernkraftwerk nach Anspruch 1, **dadurch gekennzeichnet, dass** die erdbebensichere Begrenzungsbaugruppe (400) eine erste erdbebensichere Halterung (410), eine zweite erdbebensichere Halterung (420), einen ersten erdbebensicheren Stift (430), einen zweiten erdbebensicheren Stift (440), eine erste Verriegelung (450) und eine zweite Verriegelung (460) umfasst, wobei die erste erdbebensichere Halterung (410) und die zweite erdbebensichere Halterung (420) jeweils an den Sicherheitsbehälter des Kernkraftwerks geschweißt sind, wobei der erste erdbebensichere Stift (430) und der zweite erdbebensichere Stift (440) fest mit einem dritten Ohr (15) und einem vierten Ohr (16) verbunden sind, die jeweils an zwei Seiten des Türdichtkopfs (1) angeordnet sind, um eine linke und eine rechte Bewegung des Türdichtkopfs (1) einzuschränken, wobei die erste Verriegelung (450) und die zweite Verriegelung (460) bewegbar mit der ersten erdbebensicheren Halterung (410) und der zweiten erdbebensicheren Halterung (420) verbunden sind, um jeweils eine Aufwärts- und Abwärtsbewegung des Türdichtkopfs (1) einzuschränken.

19. Vorrichtungstür für ein Kernkraftwerk nach Anspruch 16, **dadurch gekennzeichnet, dass** die Vorrichtungstür für ein Kernkraftwerk ferner Folgendes umfasst: eine Übersetzungsbaugruppe (600), wobei die Übersetzungsbaugruppe (600) eine erste Übersetzungseinheit (610) und eine zweite Übersetzungseinheit (620) umfasst, wobei die erste Übersetzungseinheit (610) und die zweite Übersetzungseinheit (620) jeweils fest mit der ersten Führungsschiene (311) und der zweiten Führungsschiene (321) verbunden sind, die erste Übersetzungseinheit (610) einen ersten Führungsschieber (611), einen ersten Führungsblock (612) und eine erste Schubzugstange (613) umfasst, der erste Führungsschieber (611) fest mit der ersten Führungsschiene (311) verbunden ist, die erste Schubzugstange (613) bewegbar mit dem ersten Führungsblock (612) verbunden ist, der erste Führungsblock (612) durch die erste Schubzugstange (613) verschiebbar mit dem ersten Führungsschieber (611) verbunden ist und der Türdichtkopf (1) unter der Führungswirkung des ersten Führungsblocks (612) überführt wird, nachdem er zurückgesetzt wurde.

20. Vorrichtungstür für ein Kernkraftwerk nach Anspruch 1, **dadurch gekennzeichnet, dass** die Vorrichtungstür für ein Kernkraftwerk ferner Stahlplattformen (700) in unterschiedlichen Höhen für einen Betrieb von Personal umfasst und die Stahlplattformen (700) in unterschiedlichen Höhen durch eine Leiter (800) verbunden sind.

## Revendications

1. Porte de dispositif pour centrale nucléaire, comprenant :
une virole reliée de manière fixe à une pièce de pénétration d'une enceinte de confinement à travers une bride de virole ;
une tête (1) de joint d'étanchéité de porte, correspondant à une surface d'extrémité de la virole et reliée de manière étanche à la virole ;
un ensemble levage hissage (100), positionné au-dessus de la tête (1) de joint d'étanchéité de porte et relié de manière mobile à la tête (1) de joint d'étanchéité de porte, et conçu pour réaliser un hissage et un réarmement de la tête (1) de joint d'étanchéité de porte, l'ensemble levage hissage (100) comprenant deux consoles de hissage (110) agencées symétriquement sur deux côtés de la tête (1) de joint d'étanchéité de porte et deux mécanismes de hissage (120) respectivement fixés aux deux consoles de hissage correspondantes (110) ; les mécanismes de hissage (120) étant conçus pour hisser et réarmer la tête (1) de joint d'étanchéité de porte ; les consoles de hissage (110) étant conçues pour supporter les mécanismes de hissage (120), l'ensemble levage hissage (100) comprenant en outre une unité de commande reliée respectivement aux deux mécanismes de hissage (120), pour commander le fonctionnement synchrone des deux mécanismes de hissage (120) ; les consoles de hissage (110) comprennent une première console de hissage (111) et une seconde console de hissage (112), et les mécanismes de hissage (120) comprennent respectivement un premier mécanisme de hissage (121) et un second mécanisme de hissage (122) fixés à la première console de hissage (111) et à la seconde console de hissage (112), et l'ensemble levage hissage (100) comprenant en outre un mécanisme d'enroulement de câble (123) reliant le premier mécanisme de hissage (121) et le second mécanisme de hissage (122) ;
un ensemble de suspension en position haute (200), positionné au-dessus de la tête (1) de joint d'étanchéité de porte et conçu pour être relié de manière amovible à la tête (1) de joint d'étanchéité de porte lorsque la tête (1) de joint d'étanchéité de porte est hissée à une position spécifiée ; et
un ensemble de limitation antisismique (400), partiellement prévu sur l'enceinte de confinement et relié de manière mobile à la tête (1) de joint d'étanchéité de porte, et conçu pour réaliser un traitement de limitation et antisismique sur la tête (1) de joint d'étanchéité de porte lorsque la tête (1) de joint d'étanchéité de porte est suspendue à l'ensemble de suspension en position haute (200),
ledit mécanisme d'enroulement de câble (123) comprenant : une première poulie de levage (1231), une première unité d'équilibrage (1233) et une première poulie de guidage (1234) enroulées et reliées à un premier câble métallique (1212) et à un deuxième câble métallique (1213), une seconde poulie de levage (1232), une seconde unité d'équilibrage (1237) et une seconde poulie de guidage (1238) enroulées et reliées à un troisième câble métallique (1222) et à un quatrième câble métallique (1223), et un dispositif anti-rupture (1239) reliant le deuxième câble métallique (1213) et le quatrième câble métallique (1223), pour assurer la sécurité de travail du premier mécanisme de hissage (121) et du second mécanisme de hissage (122).

2. Porte de dispositif pour centrale nucléaire selon la revendication 1, **caractérisée en ce que** la porte de dispositif pour centrale nucléaire comprend en outre :
un ensemble de guidage (300), agencé sur les deux côtés de la tête (1) de joint d'étanchéité de porte et conçu pour guider la tête (1) de joint d'étanchéité de porte lorsque la tête (1) de joint d'étanchéité de porte est abaissée et réarmée ; et
un ensemble de positionnement et de centrage (500), agencé sur un côté externe de la tête (1) de joint d'étanchéité de porte et au niveau d'une bride de virole correspondant à un côté externe de la tête (1) de joint d'étanchéité de porte, et conçu pour positionner et centrer la tête (1) de joint d'étanchéité de porte par rapport à la virole pour obtenir un raccord étanche entre eux.

3. Porte de dispositif pour centrale nucléaire selon la revendication 1, **caractérisée en ce que**, le premier mécanisme de hissage (121) comprend : une première bobine (1211), un premier câble métallique (1212) et un deuxième câble métallique (1213) enroulés sur la première bobine (1211), une extrémité du premier câble métallique (1212) est reliée de manière fixe à la première bobine (1211), et l'autre extrémité du premier câble métallique (1212) est reliée de manière fixe à la première console de hissage (111).

4. Porte de dispositif pour centrale nucléaire selon la revendication 1, **caractérisée en ce que**, le second mécanisme de hissage (122) comprend : une seconde bobine (1221), un troisième câble métallique (1222) et un quatrième câble métallique (1223) enroulés sur la seconde bobine (1221), une extrémité du troisième câble métallique (1222) est reliée de manière fixe à la seconde bobine (1221), et l'autre extrémité du troisième câble métallique (1222) est reliée de manière fixe à la seconde console de hissage (112).

5. Porte de dispositif pour centrale nucléaire selon la revendication 1, **caractérisée en ce que**, une extrémité du deuxième câble métallique (1213) est reliée de manière fixe à la première bobine (1211), et l'autre extrémité du deuxième câble métallique (1213) est enroulée et reliée à la première poulie de levage (1231), à la première unité d'équilibrage (1233), à la première poulie de guidage (1234) et au dispositif anti-rupture (1239) en séquence ;
une extrémité du quatrième câble métallique (1223) est reliée de manière fixe à la seconde bobine (1221), et l'autre extrémité du quatrième câble métallique (1223) est enroulée et reliée à la seconde poulie de levage (1232), à la seconde unité d'équilibrage (1237), à la seconde poulie de guidage (1238) et au dispositif anti-rupture (1239) en séquence.

6. Porte de dispositif pour centrale nucléaire selon la revendication 1 ou 5, **caractérisée en ce que**, le dispositif anti-rupture (1239) comprend une rainure coulissante (12391), et un arbre coulissant (12392) agencé dans la rainure coulissante (12391) et relié de manière coulissante à la rainure coulissante (12391), la rainure coulissante (12391) est reliée de manière fixe à l'ensemble de suspension en position haute (200), le deuxième câble métallique (1213) est enroulé et relié à l'arbre coulissant (12392) et s'étend d'un côté près du second mécanisme de hissage (122), le quatrième câble métallique (1223) est enroulé et relié à l'arbre coulissant (12392), et s'étend d'un côté près du premier mécanisme de hissage (121), et s'étend jusqu'au deuxième câble métallique (1213) et au quatrième câble métallique (1223) près d'un côté du second mécanisme de hissage (122), et le quatrième câble métallique (1223) et le deuxième câble métallique (1213) s'étendant d'un côté près du premier mécanisme de hissage (121) sont reliés de manière fixe par des loquets de verrouillage (12393).

7. Porte de dispositif pour centrale nucléaire selon la revendication 6, **caractérisée en ce que**, le premier mécanisme de hissage (121) comprend en outre : un moteur (1214), un réducteur de vitesse (1215), un frein de fonctionnement (1216), un frein d'urgence (1217) et un frein de sécurité (1218) fixés sur la première console de hissage (111), le moteur (1214) est conçu pour fournir une force d'entraînement pour la première bobine (1211), un arbre de sortie du moteur (1214) est relié à un arbre d'entrée du réducteur de vitesse (1215), un arbre de sortie du réducteur de vitesse (1215) est relié à un arbre d'entrée de la première bobine (1211), le frein de fonctionnement (1216) et le frein d'urgence (1217) sont agencés sur l'arbre d'entrée du réducteur de vitesse (1215) respectivement, et le frein de sécurité (1218) est agencé sur un arbre d'entrée de la première bobine (1211).

8. Porte de dispositif pour centrale nucléaire selon la revendication 1, **caractérisée en ce que**, le premier mécanisme de hissage (121) comprend en outre un volant (1219), et le volant (1219) est agencé au niveau d'un arbre d'entrée du moteur (1214) fixé sur la première console de hissage (111), lorsque le moteur (1214) perd de la puissance, la tête (1) de joint d'étanchéité de porte est libérée par l'intermédiaire de l'entraînement du mécanisme de hissage (120) par le volant (1219) ; le premier mécanisme de hissage (121) comprend en outre une unité de dissipation de chaleur (12110) disposée au-dessus du moteur (1214) destinée à dissiper la chaleur du moteur (1214).

9. Porte de dispositif pour centrale nucléaire selon la revendication 1 ou 5, **caractérisée en ce que**, la première unité d'équilibrage (1233) comprend : un support (12331) fixé sur la première console de hissage (111), un axe de rotation (12332) relié de manière fixe au support (12331), une poutre d'équilibrage (12333) reliée de manière rotative à l'axe de rotation (12332), et un premier bras de suspension (12334), un second bras de suspension (12335), un premier amortisseur (12336) et un second amortisseur (12337) articulés à la poutre d'équilibrage (12333), le premier bras de suspension (12334) et le second bras de suspension (12335) sont répartis symétriquement le long du support (12331), une extrémité du premier bras de suspension (12334) et du second bras de suspension (12335) éloignés de la poutre d'équilibrage (12333) sont respectivement munis d'une première poulie (12338) et d'une deuxième poulie (12339), le premier amortisseur (12336) et le second amortisseur (12337) sont répartis symétriquement le long du support (12331) et sont situés à l'extérieur du premier bras de suspension (12334) et du second bras de suspension (12335), une extrémité du premier amortisseur (12336) et une extrémité du second amortisseur (12337) sont reliées de manière fixe à la poutre d'équilibrage (12333), et l'autre extrémité du premier amortisseur (12336) est reliée de manière fixe à la première console de hissage (111) ; l'axe de rotation (12332) est muni d'un capteur de pesée (123310), pour surveiller l'état de contrainte de la poutre d'équilibrage (12333) en temps réel.

10. Porte de dispositif pour centrale nucléaire selon la revendication 9, **caractérisée en ce que**, la première poulie de levage (1231) comprend : une troisième poulie (12311), une quatrième poulie (12312), un roulement (12313), un axe de poulie (12314), une plaque à oreilles (12315) et un arbre à oreilles (12316), la troisième poulie (12311) et la quatrième poulie (12312) sont réparties symétriquement le long de la plaque à oreilles (12315), la troisième poulie (12311) et la quatrième poulie (12312) sont reliées de manière fixe à l'axe de poulie (12314) par l'intermédiaire du roulement (12313), l'arbre à oreilles (12316) s'étend transversalement à travers la plaque à oreilles (12315), et l'arbre à oreilles (12316) est relié à la plaque à oreilles (12315) par l'intermédiaire d'une liaison de roulement, l'arbre à oreilles (12316) est relié de manière fixe à la tête (1) de joint d'étanchéité de porte ; le premier câble métallique (1212) et la troisième poulie (12311) sont enroulés et reliés, le deuxième câble métallique (1213) et la quatrième poulie (12312) sont enroulés et reliés.

11. Porte de dispositif pour centrale nucléaire selon la revendication 1 ou 5, **caractérisée en ce que**, la tête (1) de joint d'étanchéité de porte est muni symétriquement d'une première oreille (13) et d'une seconde oreille (14) sur une partie supérieure de celle-ci, la seconde oreille (14) est reliée de manière fixe à la seconde poulie de levage (1232), et la première oreille (13) est reliée de manière fixe à l'arbre à oreilles (12316), pour se déplacer vers le haut sous l'effet de l'entraînement de la première poulie de levage (1231) et de la seconde poulie de levage (1232).

12. Porte de dispositif pour centrale nucléaire selon la revendication 1, **caractérisée en ce que** l'ensemble de suspension en position haute (200) comprend : une console de suspension en position haute (210) disposée directement au-dessus de la tête (1) de joint d'étanchéité de porte et une première unité de suspension (220) et une seconde unité de suspension (230) reliées de manière fixe à la console de suspension en position haute (210), et la première unité de suspension (220) et la seconde unité de suspension (230) sont conçues pour être reliées de manière amovible à la première oreille d'accrochage (11) et à la seconde oreille d'accrochage (12) prévues respectivement sur deux côtés de la tête (1) de joint d'étanchéité de porte lorsque la tête (1) de joint d'étanchéité de porte est ouverte, la première oreille d'accrochage (11) et la seconde oreille d'accrochage (12) sont respectivement soudées et reliées à la tête (1) de joint d'étanchéité de porte.

13. Porte de dispositif pour centrale nucléaire selon la revendication 12, **caractérisée en ce que**, la première unité de suspension (220) comprend : un support en acier (221), un crochet de suspension (222) et une butée à ressort (223), le support en acier (221) est fixé sur la console de suspension en position haute (210), le crochet de suspension (222) est articulé au support en acier (221), la butée à ressort (223) est articulée au crochet de suspension (222), lorsque la tête (1) de joint d'étanchéité de porte se déplace vers le haut vers une position désignée, la première oreille d'accrochage (11) repousse la butée à ressort (223) pour se relier de manière amovible au crochet de suspension (222).

14. Porte de dispositif pour centrale nucléaire selon la revendication 13, **caractérisée en ce que**, le support en acier (221) comprend un premier support (2211) et un deuxième support (2212) et un troisième support (2213) parallèles entre eux et perpendiculaires au premier support (2211), le deuxième support (2212) et le troisième support (2213) forment un espace ouvert, une extrémité du crochet de suspension (222) s'étend vers l'espace ouvert, la première unité de suspension (220) comprend en outre une broche (224), la broche (224) s'étend à travers le deuxième support (2212), le troisième support (2213) et le crochet de suspension (222), pour réaliser le raccord articulé entre le crochet de suspension (222) et le support en acier (221).

15. Porte de dispositif pour centrale nucléaire selon la revendication 14, **caractérisée en ce que**, la console de suspension en position haute (210) comprend une pluralité de poutres principales (211) perpendiculaires à l'enceinte de confinement, et une première poutre (212), une deuxième poutre (213) et une troisième poutre (214) perpendiculaires aux poutres principales (211), la poutre principale (211) est reliée de manière fixe à une paroi du bâtiment de confinement de centrale nucléaire, la première poutre (212), la deuxième poutre (213) et la poutre principale (211) forment une pluralité d'espaces annulaires, le support en acier (221) est relié de manière fixe aux espaces annulaires, la console de suspension en position haute (210) comprend en outre une pluralité de poutres de support obliques (215) pour améliorer la stabilité de la console de suspension en position haute (210), et la première poulie de guidage (1234) et la seconde poulie de guidage (1238) étant respectivement fixées à deux extrémités de la troisième poutre (214).

16. Porte de dispositif pour centrale nucléaire selon la revendication 2, **caractérisée en ce que** l'ensemble de guidage (300) comprend :
une première unité de guidage (310), la première unité de guidage (310) comprend un premier rail de guidage agencé verticalement (311) et une première roue de guidage (312) capable de se déplacer vers le haut ou vers le bas le long du premier rail de guidage (311), une extrémité de la première roue de guidage (312) est reliée de manière fixe à la tête (1) de joint d'étanchéité de porte, et l'autre extrémité est reliée de manière coulissante au premier rail de guidage (311) ;
une seconde unité de guidage (320), la seconde unité de guidage (320) comprend un second rail de guidage agencé verticalement (321) et une seconde roue de guidage (322) capable de se déplacer vers le haut ou vers le bas le long du second rail de guidage (321), une extrémité de la seconde roue de guidage (322) est reliée de manière fixe à la tête (1) de joint d'étanchéité de porte, et l'autre extrémité est reliée de manière coulissante au second rail de guidage (321).

17. Porte de dispositif pour centrale nucléaire selon la revendication 2, **caractérisée en ce que** l'ensemble de positionnement et de centrage (500) comprend une unité de positionnement (510) et une unité de centrage (520) ;
l'unité de positionnement (510) comprend : un premier support (511) relié de manière fixe à la bride de la virole, un premier rail circulaire (512) agencé à l'intérieur du premier support (511), et un premier support de rouleau (515) relié de manière fixe à la tête (1) de joint d'étanchéité de porte, le premier rouleau (513) est relié de manière fixe au premier support de rouleau (515) par l'intermédiaire d'un premier arbre (514) de rouleau, de façon à réaliser le positionnement en hauteur de la tête (1) de joint d'étanchéité de porte ;
l'unité de centrage (520) comprend : un second support (521) relié de manière fixe à la bride de la virole, un second rail circulaire (522) disposé à l'intérieur du second support (521), et un second support de rouleau (527) relié de manière fixe à la tête (1) de joint d'étanchéité de porte, le deuxième rouleau (523) et le troisième rouleau (524) sont reliés au second support de rouleau (527) par l'intermédiaire d'un deuxième arbre de rouleau (525) et d'un troisième arbre de rouleau (526), pour réaliser un centrage automatique de la tête (1) de joint d'étanchéité de porte.

18. Porte de dispositif pour centrale nucléaire selon la revendication 1, **caractérisée en ce que**, l'ensemble de limitation antisismique (400) comprend une première console antisismique (410), une seconde console antisismique (420), une première broche antisismique (430), une seconde broche antisismique (440), un premier verrou (450) et un second verrou (460), la première console antisismique (410) et la seconde console antisismique (420) sont soudées respectivement à l'enceinte de confinement de la centrale nucléaire, la première broche antisismique (430) et la seconde broche antisismique (440) sont reliées respectivement de manière fixe à une troisième oreille (15) et à une quatrième oreille (16) agencées sur deux côtés de la tête (1) de joint d'étanchéité de porte, pour limiter le mouvement à gauche et à droite de la tête (1) de joint d'étanchéité de porte, le premier verrou (450) et le second verrou (460) sont reliés respectivement de manière mobile à la première console antisismique (410) et à la seconde console antisismique (420) pour limiter le mouvement vers le haut et vers le bas de la tête (1) de joint d'étanchéité de porte.

19. Porte de dispositif pour centrale nucléaire selon la revendication 16, **caractérisée en ce que** la porte de dispositif pour centrale nucléaire comprend en outre : un ensemble de translation (600), l'ensemble de translation (600) comprend une première unité de translation (610) et une seconde unité de translation (620), la première unité de translation (610) et la seconde unité de translation (620) sont reliées respectivement de manière fixe au premier rail de guidage (311) et au second rail de guidage (321), la première unité de translation (610) comprend un premier coulisseau de guidage (611), un premier bloc de guidage (612) et une première tige de va-et-vient (613), le premier coulisseau de guidage (611) est relié de manière fixe au premier rail de guidage (311), la première tige de va-et-vient (613) est reliée de manière mobile au premier bloc de guidage (612), le premier bloc de guidage (612) est relié de manière coulissante au premier coulisseau de guidage (611) par l'intermédiaire de la première tige de va-et-vient (613), et la tête (1) de joint d'étanchéité de porte effectue une translation sous l'action de guidage du premier bloc de guidage (612) après avoir été réarmée.

20. Porte de dispositif pour centrale nucléaire selon la revendication 1, **caractérisée en ce que** la porte de dispositif pour centrale nucléaire comprend en outre des plates-formes en acier (700) à différentes hauteurs pour le fonctionnement du personnel, et les plates-formes en acier (700) à différentes hauteurs sont reliées par une échelle (800).
